# EUROPEAN PATENT APPLICATION

(11) **EP 4 571 545 A1**
(43) Date of publication of application: **18.06.2025**
(21) Application number: 23852387.2
(22) Date of filing: 27.07.2023
(51) Int. Cl.: G06F 21/44, G06F 8/61, H04L 67/10

(54) **METHOD FOR PROCESSING INFORMATION, SERVER DEVICE, AND INFORMATION PROCESSING DEVICE**

(30) Priority: 10.08.2022 JP 2022127752
(71) Applicant: Sony Semiconductor Solutions Corporation, Atsugi-shi, Kanagawa 243-0014 (JP)
(72) Inventor: KANDA Yuta, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/027504
(87) International publication number: WO 2024/034413

(57) **Abstract**

The present technology relates to an information processing method, a server apparatus, and an information processing apparatus which enable only an authorized user to use a device.

The information processing method of the present technology includes, via a server apparatus, performing authentication of a device by collating first device information unique to the device, which is transmitted from the device that has acquired connection destination information indicating a connection destination, with second device information registered in advance. The present technology can be applied to, for example, an information processing system that provides a cloud service using an Al application.

## Description

### [Technical Field]

The present technology relates to an information processing method, a server apparatus, and an information processing apparatus, and more particularly, to an information processing method, a server apparatus, and an information processing apparatus which enable only an authorized user to use a device.

### [Background Art]

A device is generally set up using a two-dimensional code. For example, PTL 1 discloses that setting of a connection apparatus is performed by imaging a sheet on which unique information unique to a user is recorded in a form of a two-dimensional code is imaged, by using a camera, and storing unique information (ID and password) acquired by analyzing the two-dimensional code.

### [Citation List]

### [Patent Literature]

[PTL 1]
JP 2012-155754A

### [Summary]

### [Technical Problem]

The device does not hold information to limit users who use the device until the unique information is input. Therefore, a person different from the authorized user who has purchased the device can use the device by inputting unique information of the person.

The present technology has been devised in such circumstances, and enables only the authorized users to use the device.

### [Solution to Problem]

An information processing method according to a first aspect of the present technology includes, via a server apparatus, performing authentication of a device by collating first device information unique to the device, which is transmitted from the device that has acquired connection destination information indicating a connection destination, with second device information registered in advance.

A server apparatus according to the first aspect of the present technology includes an authentication unit that performs authentication of a device by collating first device information unique to the device, which is transmitted from the device that has acquired connection destination information indicating a connection destination, with second device information registered in advance.

An information processing method according to a second aspect of the present technology includes, via an information processing apparatus, acquiring connection destination information indicating, as a connection destination, a server that performs authentication of an own apparatus by collating first device information unique to the own apparatus with second device information registered in advance; transmitting the first device information to the server indicated by the connection destination information; and downloading firmware of the own apparatus from the server in a case where the first device information matches the second device information.

An information processing apparatus according to the second aspect of the present technology includes an acquisition unit acquires connection destination information indicating, as a connection destination, a server that performs authentication of an own apparatus by collating first device information unique to the own apparatus with second device information registered in advance; and a communication control unit that transmits the first device information to the server, and downloads firmware of the own apparatus from the server in a case where the first device information matches the second device information.

In the first aspect of the present technology, authentication of a device is performed by collating first device information unique to the device, which is transmitted from the device that has acquired connection destination information indicating a connection destination, with second device information registered in advance.

In the second aspect of the present technology, connection destination information is acquired, which indicates, as a connection destination, a server that performs authentication of an own apparatus by collating first device information unique to the own apparatus with second device information registered in advance; the first device information is transmitted to the server indicated by the connection destination information; and firmware of the own apparatus is downloaded from the server in a case where the first device information matches the second device information.

### [Brief Description of Drawings]

[Fig. 1]

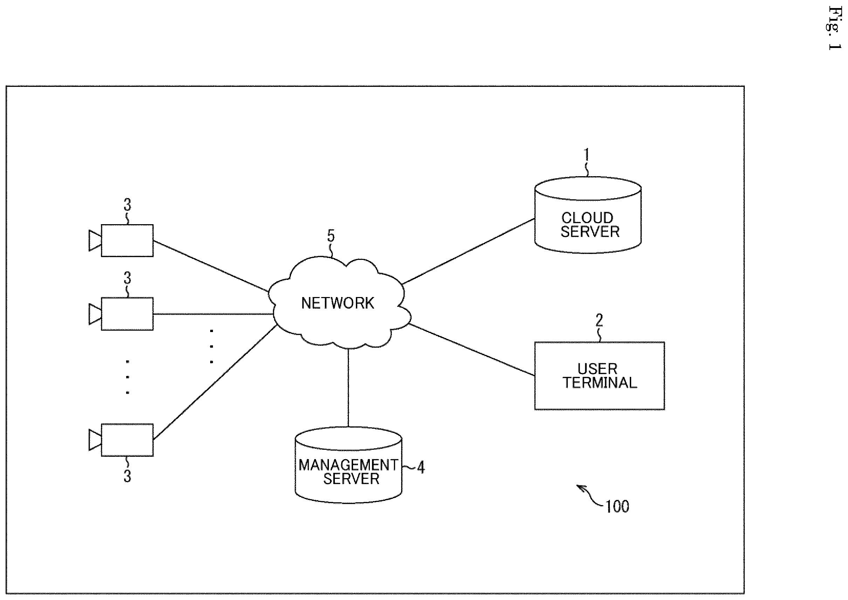

   Fig. 1 is a diagram illustrating a schematic configuration example of an information processing system according to the present technology.
[Fig. 2]

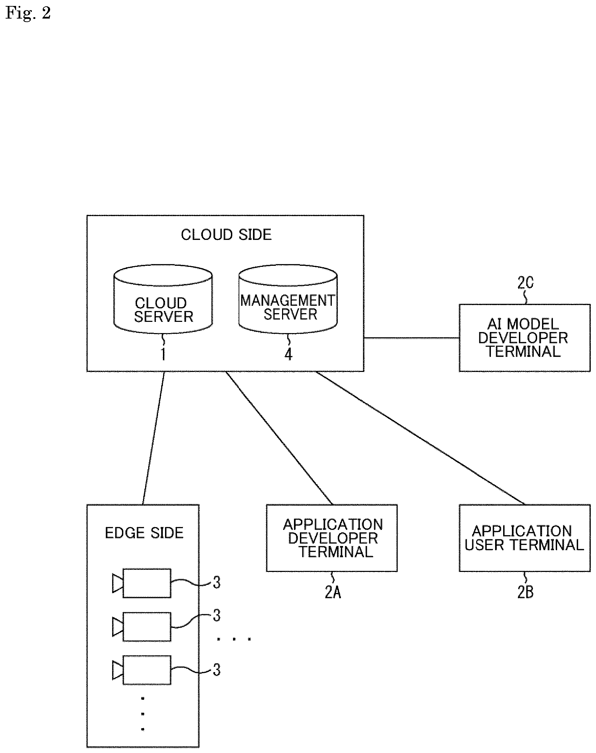

   Fig. 2 is a diagram for describing each equipment that registers and downloads an AI model and an AI application via a marketplace function included in a cloud-side information processing apparatus.
[Fig. 3]

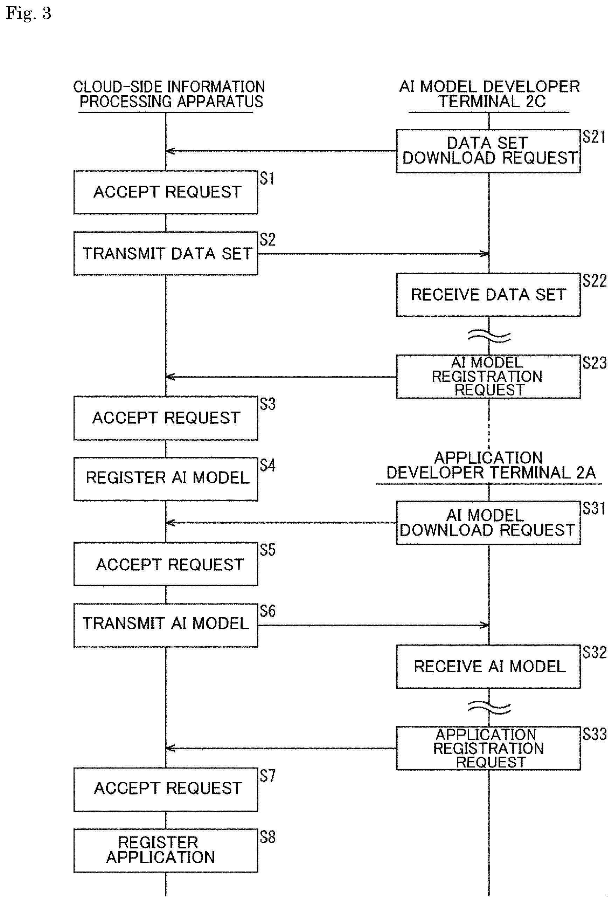

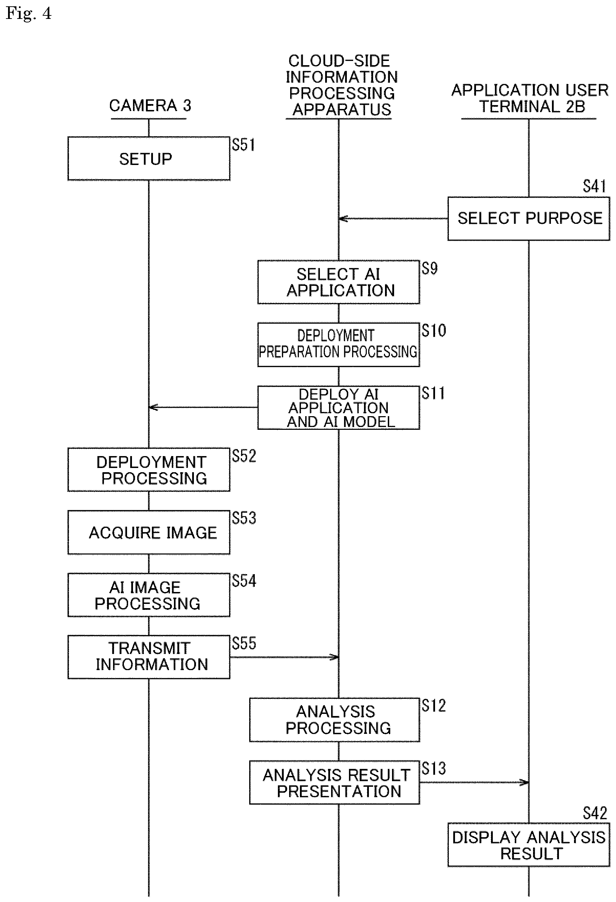

   Fig. 3 is a diagram illustrating an example of a flow of processing executed by each apparatus when an AI model or an AI application is registered or downloaded via a marketplace function together with Fig. 4.
[Fig. 4]
   Fig. 4 is a diagram illustrating an example of a flow of processing executed by each apparatus when an AI model or an AI application is registered or downloaded via a marketplace function together with Fig. 3.
[Fig. 5]

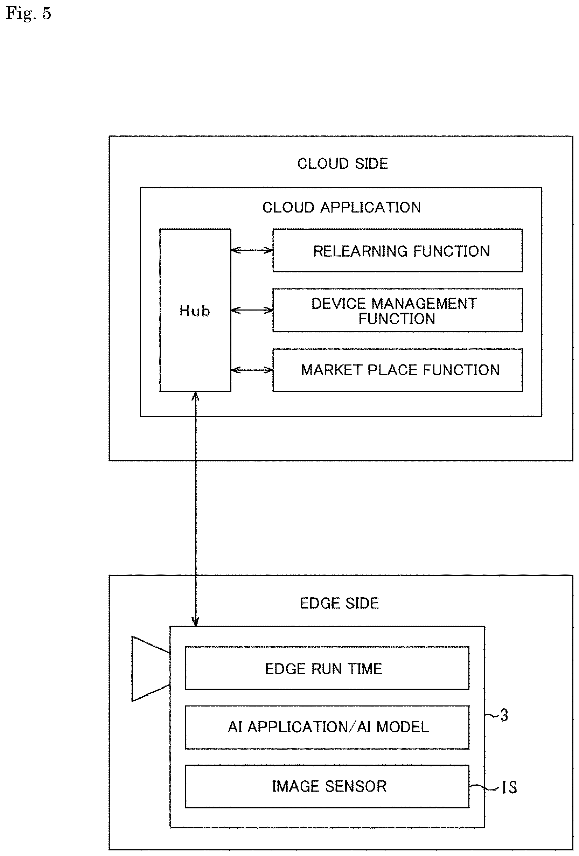

   Fig. 5 is a diagram for describing a connection mode between a cloud-side information processing apparatus and an edge-side information processing apparatus.
[Fig. 6]

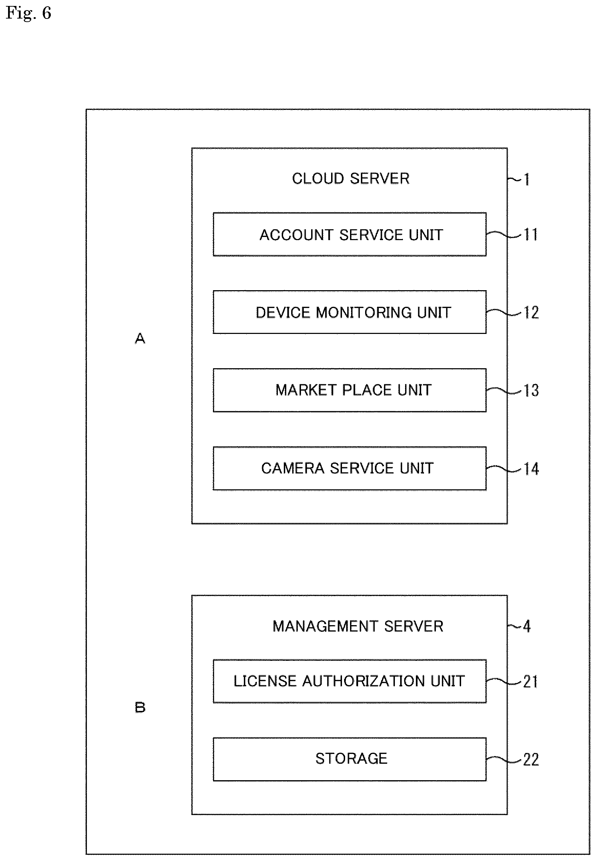

   Fig. 6 illustrates an outline of functional configurations of a cloud server and a management server.
[Fig. 7]

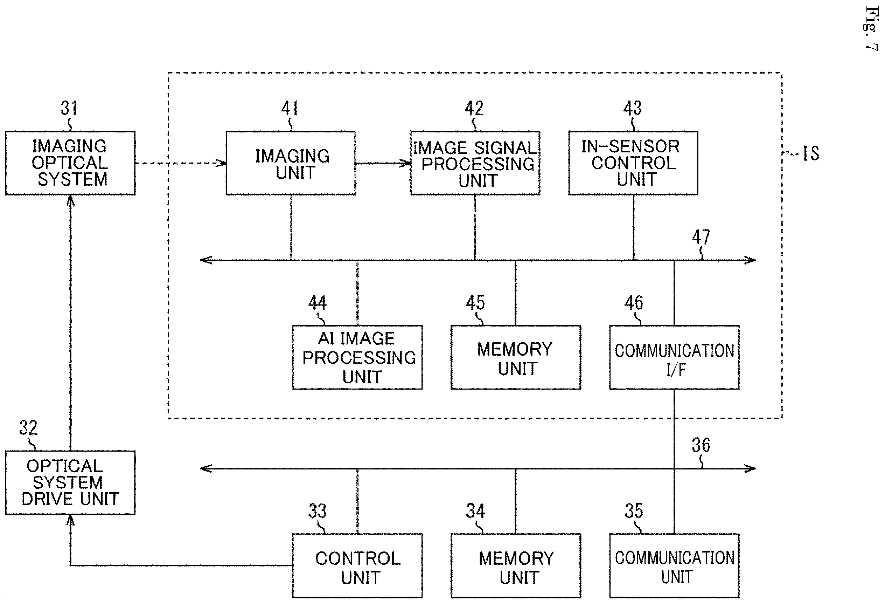

   Fig. 7 is a block diagram illustrating a configuration example of a camera.
[Fig. 8]

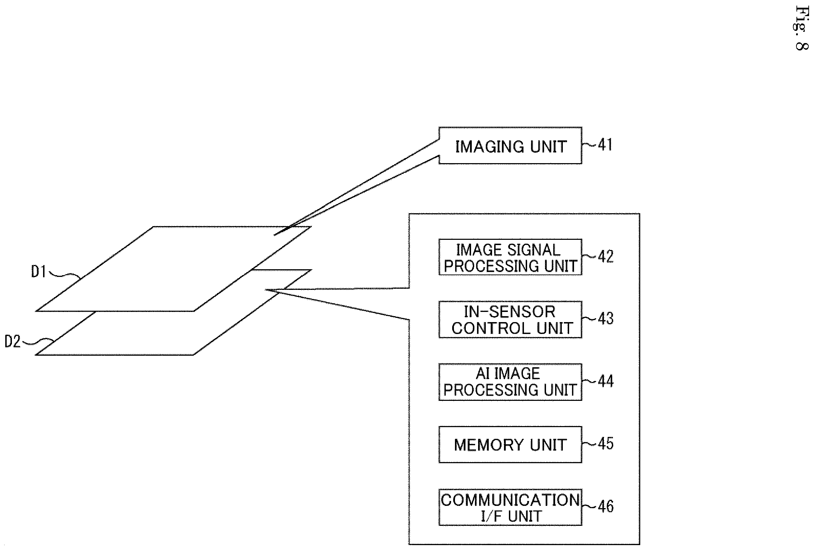

   Fig. 8 is a diagram illustrating a configuration example of an image sensor.
[Fig. 9]

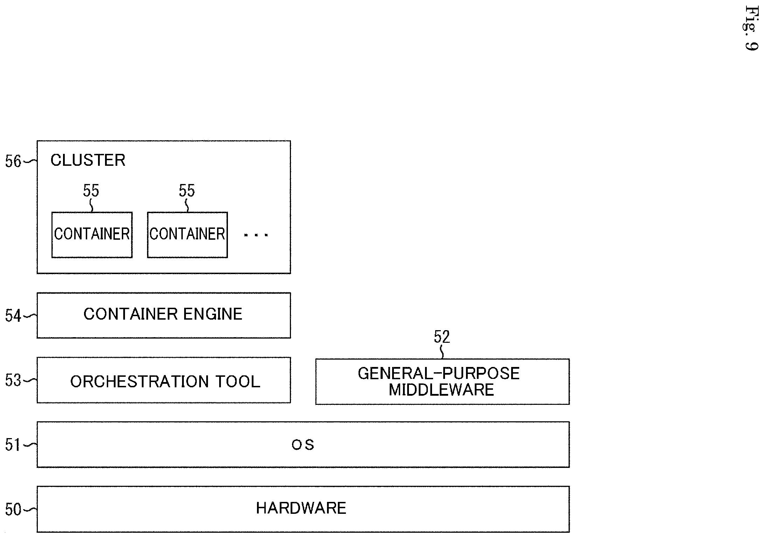

   Fig. 9 is a block diagram illustrating a software configuration of a camera.
[Fig. 10]

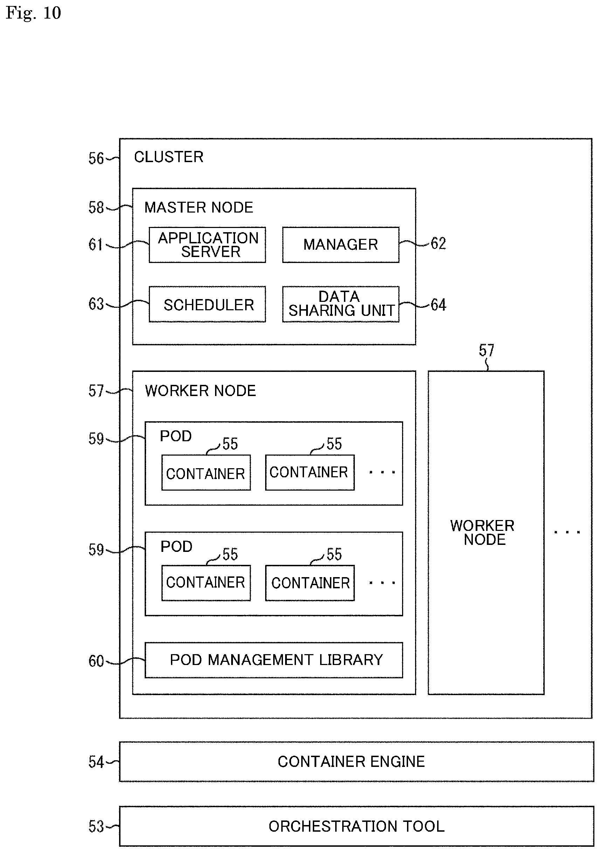

   Fig. 10 is a block diagram illustrating an operation environment of a container in a case where a container technology is used.
[Fig. 11]

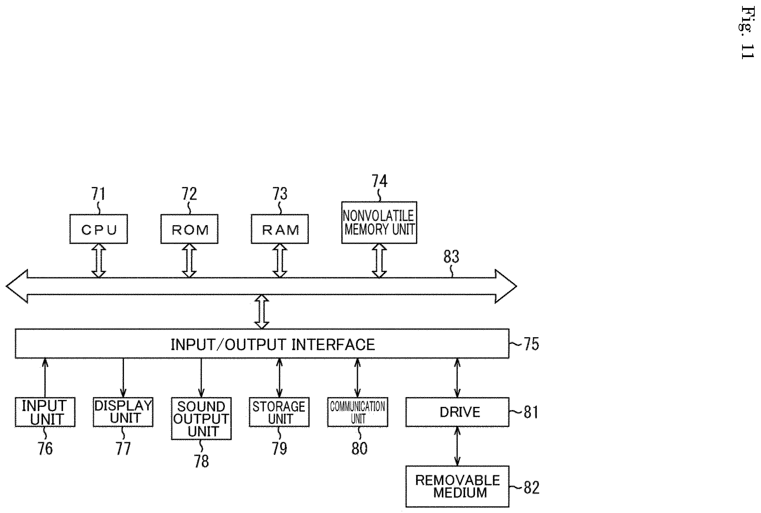

   Fig. 11 is a block diagram illustrating an example of a hardware configuration of an information processing apparatus.
[Fig. 12]

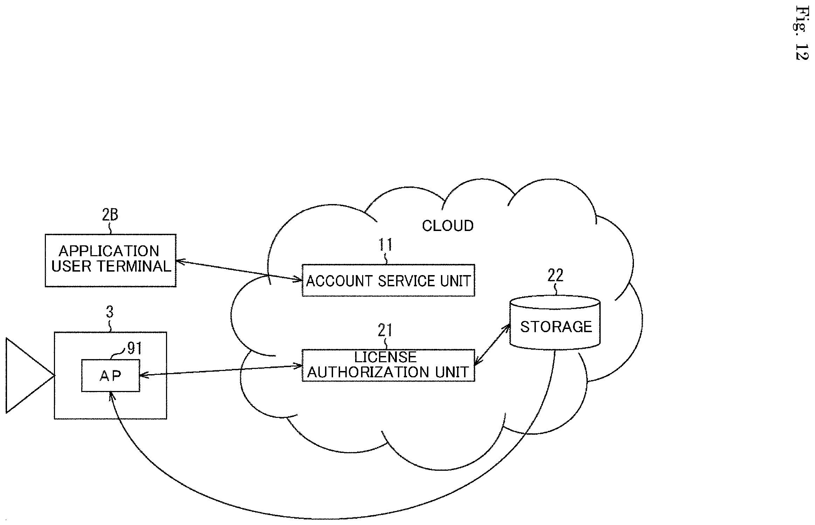

   Fig. 12 is a diagram illustrating a configuration of each apparatus related to setup of a camera.
[Fig. 13]

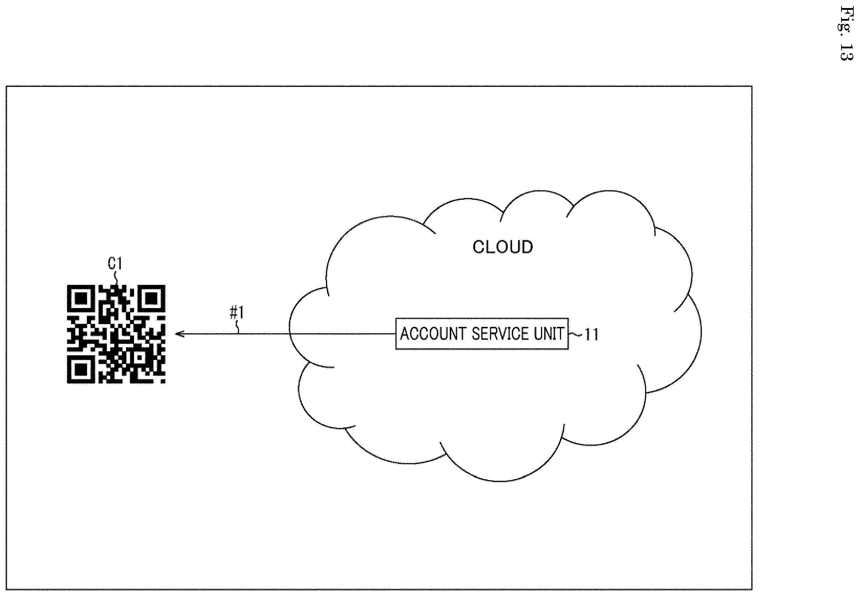

   Fig. 13 is a diagram for describing a detailed flow of setup of a camera.
[Fig. 14]

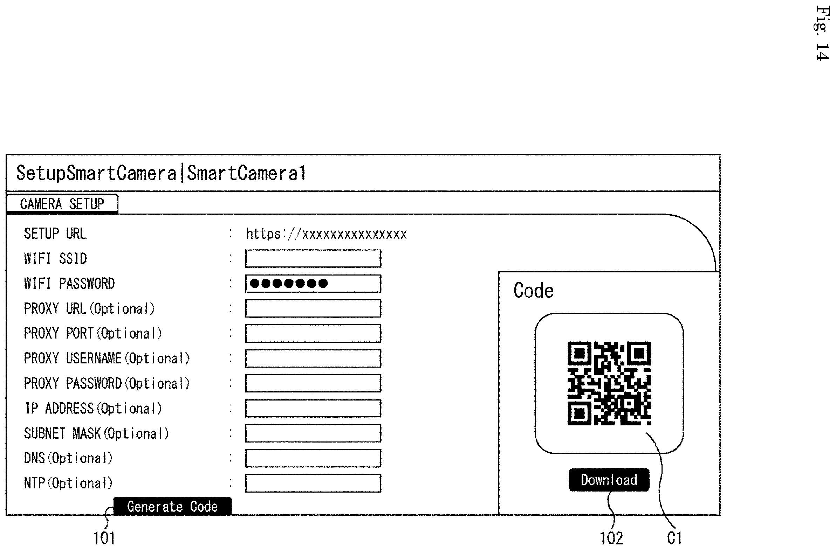

   Fig. 14 is a diagram illustrating an example of a two-dimensional code creation screen.
[Fig. 15]

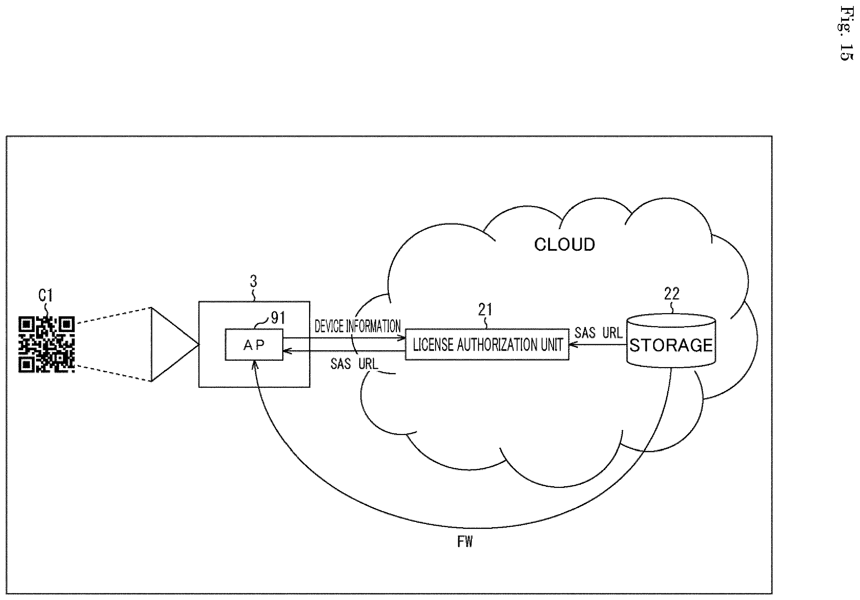

   Fig. 15 is a diagram for describing a detailed flow of setup of a camera.
[Fig. 16]

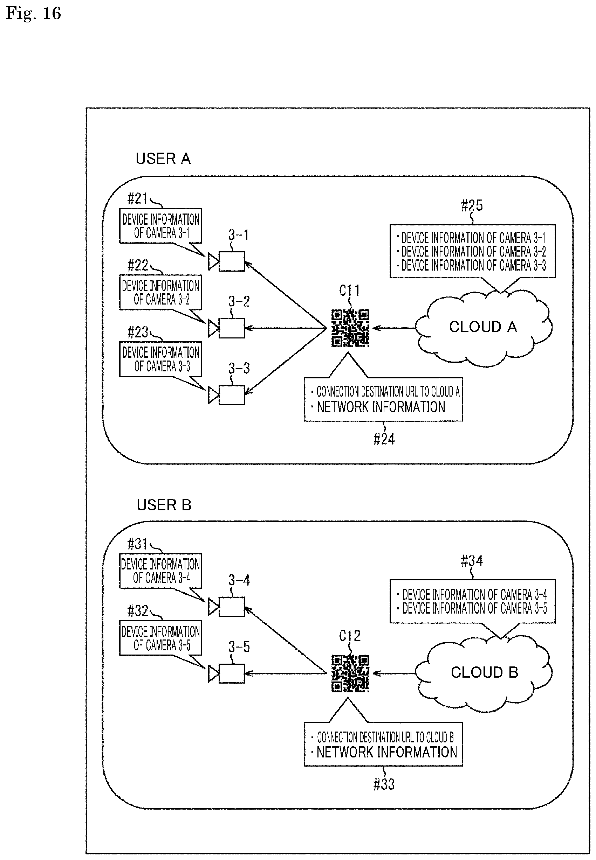

   Fig. 16 is a diagram illustrating an example of a flow of camera authentication.
[Fig. 17]

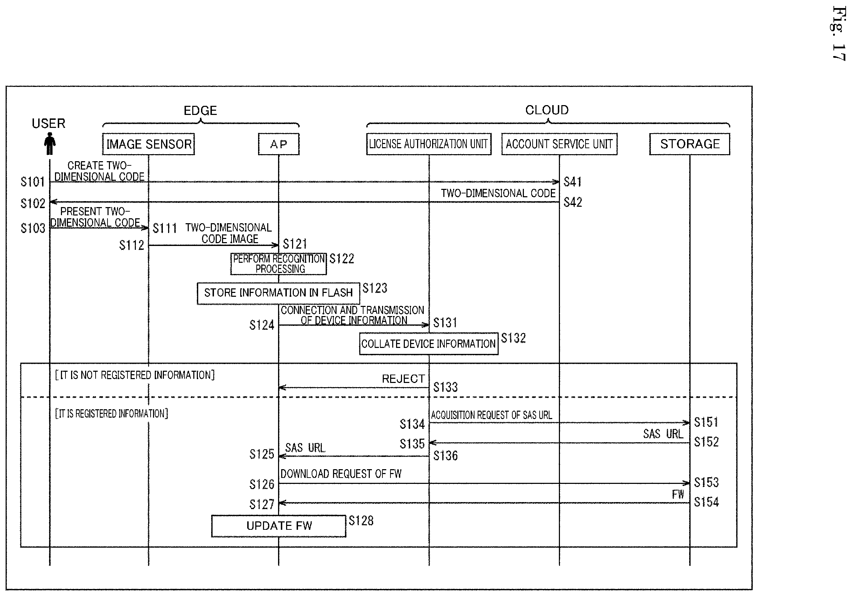

   Fig. 17 is a sequence diagram for describing processing executed by an edge-side information processing apparatus and a cloud-side information processing apparatus in order to perform setup of a camera.
[Fig. 18]

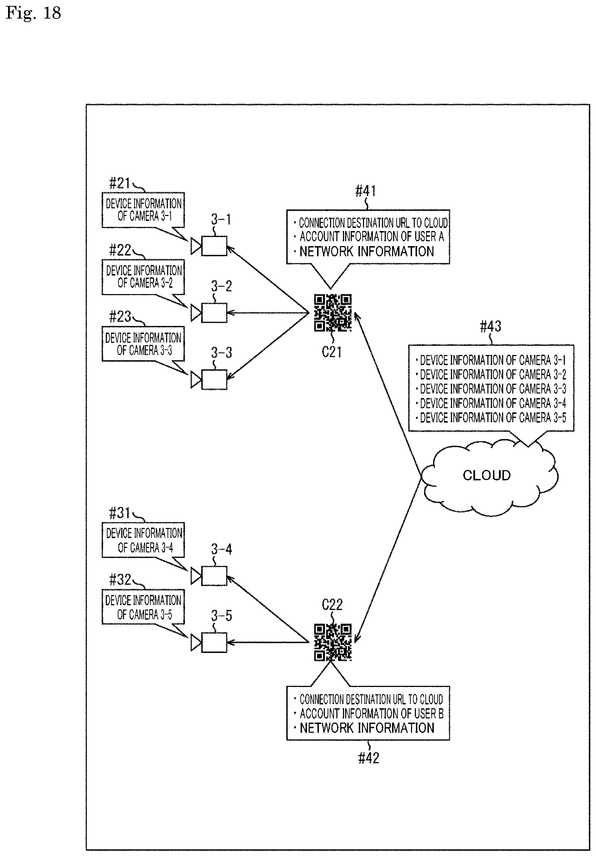

   Fig. 18 is a diagram illustrating an example of another flow of camera authentication.
[Fig. 19]

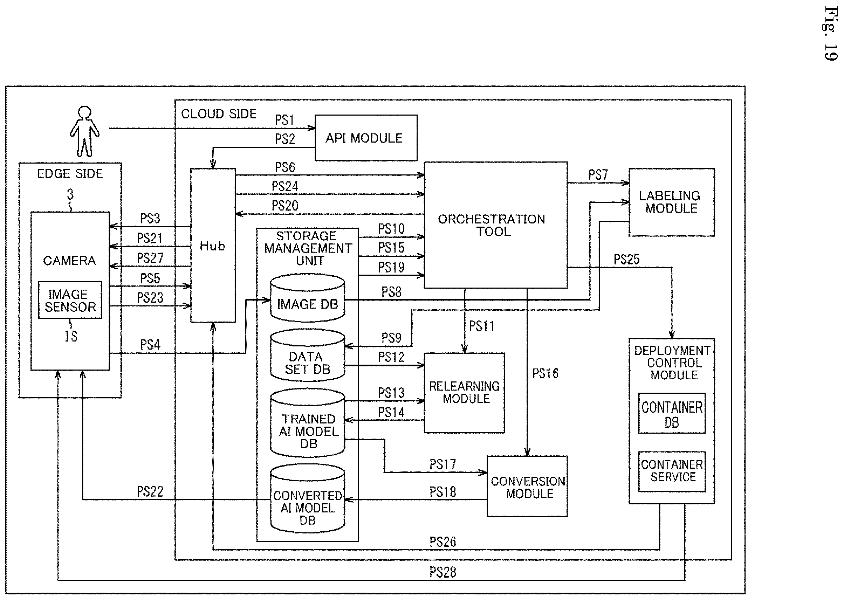

   Fig. 19 is a diagram for describing a flow of relearning processing.
[Fig. 20]

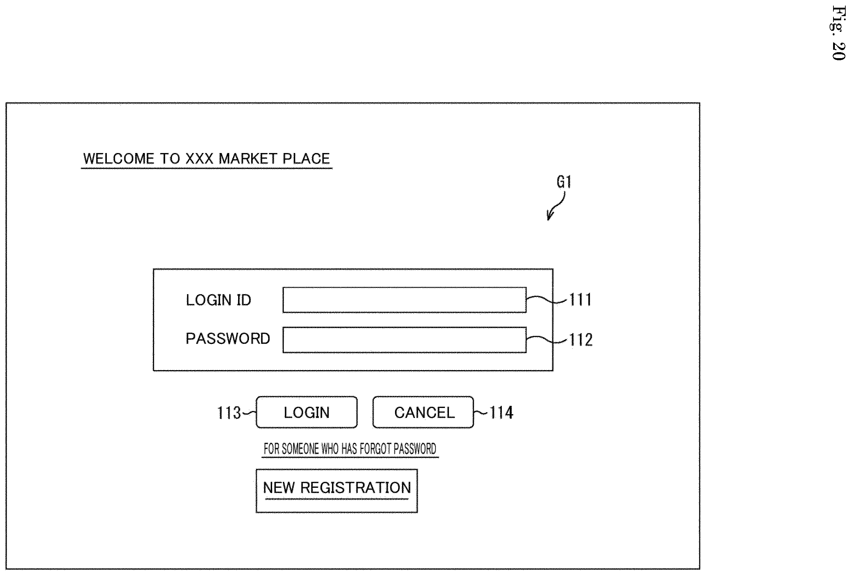

   Fig. 20 is a diagram illustrating an example of a login screen for logging in to a marketplace.
[Fig. 21]

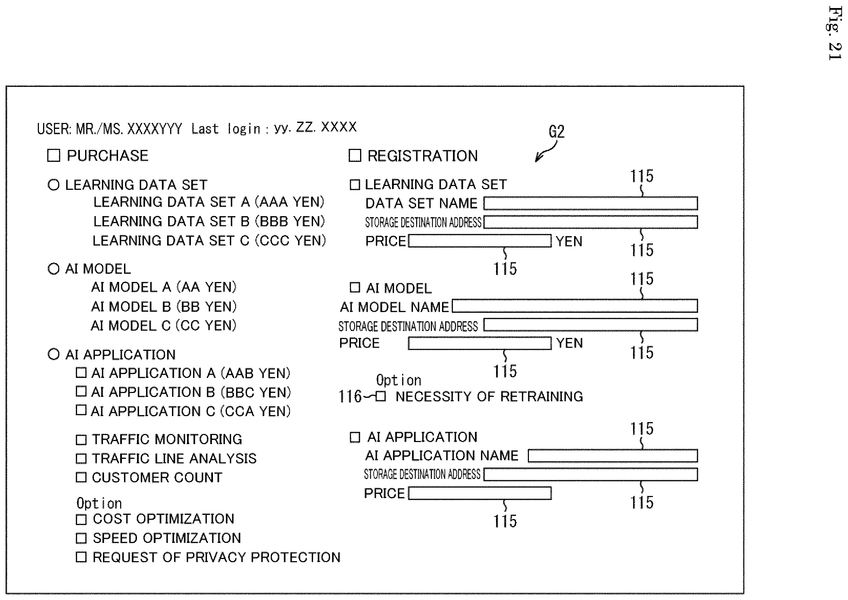

   Fig. 21 is a diagram illustrating an example of a developer-oriented screen presented to each developer who uses a marketplace.
[Fig. 22]

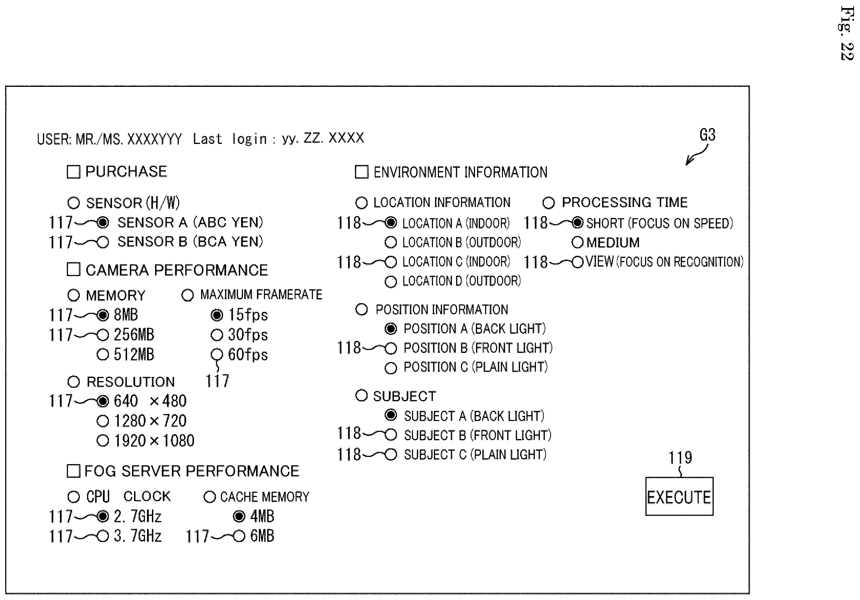

   Fig. 22 is a diagram illustrating an example of a user-oriented screen presented to an application-using user who uses a marketplace.

### [Description of Embodiments]

Hereinafter, embodiments for implementing the present technology will be described below. The description will be made in the following order.
1. Outline of Information Processing System
1-1. Overall Configuration of Information Processing System
1-2. Registration of AI Model and AI Application
1-3. Outline of Functions of Information Processing System
1-4. Configuration of Camera
1-5. Hardware Configuration of Information Processing Apparatus
2. Regarding Camera Setup
3. Regarding Relearning
4. Screen Example of Marketplace

### <1. Outline of Information Processing System>

### <1-1. Overall Configuration of Information Processing System>

Fig. 1 is a block diagram illustrating a schematic configuration example of an information processing system 100 according to the present technology.

As illustrated in Fig. 1, the information processing system 100 includes at least a cloud server 1, a user terminal 2, a plurality of cameras 3, and a management server 4. In this example, the cloud server 1, the user terminal 2, the cameras 3, and the management server 4 are configured to be able to communicate with each other via a network 5 such as the Internet.

The cloud server 1, the user terminal 2, and the management server 4 are configured as an information processing apparatus including a microcomputer including a central processing unit (CPU), a read only memory (ROM), and a random access memory (RAM).

Here, the user terminal 2 is an information processing apparatus assumed to be used by a user who is a recipient of a service using the information processing system 100. In addition, the management server 4 is an information processing apparatus assumed to be used by a provider of a service.

Each camera 3 includes an image sensor such as a charge coupled device (CCD) image sensor or a complementary metal oxide semiconductor (CMOS) image sensor, for example, and images a subject to obtain image data (captured image data) as digital data.

In addition, as described later, each camera 3 also has a function of performing processing (for example, image recognition processing, image detection processing, and the like) using artificial intelligence (AI) on a captured image. In the following description, various types of processing on an image, such as image recognition processing and image detection processing, will be simply referred to as "image processing". For example, various types of processing on an image using AI (or an AI model) will be described as "AI image processing".

Each camera 3 can transmit various kinds of data such as processing result information indicating a result of processing (image processing or the like) using AI to the cloud server 1 or the management server 4, and can receive various kinds of data transmitted from the cloud server 1 or the management server 4.

Here, the information processing system 100 illustrated in Fig. 1 is assumed to be used, for example, such that the cloud server 1 generates analysis information of a subject on the basis of the processing result information obtained by the image processing of each camera 3 and allows a user to browse the generated analysis information via the user terminal 2.

In this case, as applications of each camera 3, applications of various monitoring cameras are conceivable. Examples of the cameras include monitoring cameras for indoors such as stores, offices, and houses, monitoring cameras (including traffic monitoring cameras and the like) for monitoring outdoors such as parking lots and streets, monitoring cameras for manufacturing lines in factory automation (FA) and industrial automation (IA), monitoring cameras for monitoring the inside and the outside of vehicles, and the like.

For example, in the case of the application as a monitoring camera in a store, it is conceivable to arrange a plurality of cameras 3 at predetermined positions in the store so that the user can check a customer group (gender, age group, and the like) of a customer, an action (traffic line) in the store, and the like. In this case, as the above-described analysis information, it is conceivable to generate information of the customer group of the customers, information of the traffic line in the store, information of a congestion state at a checkout register (for example, waiting time at checkout register), and the like. Alternatively, in the case of the application as the traffic monitoring camera, it is conceivable to arrange each camera 3 at each position in the vicinity of the road so that the user can recognize information such as the number (vehicle number), the color of the car, the vehicle type, and the like of the passing vehicles. In this case, it is conceivable to generate information such as the number, the color of the car, the vehicle type, and the like as the analysis information described above.

In addition, in a case of using a traffic monitoring camera in a parking lot, it is conceivable to arrange the camera such that each parked vehicle can be monitored, to monitor whether or not a suspicious person performing suspicious behavior is around each vehicle, and in a case where there is a suspicious person, to notify of the presence of a suspicious person, an attribute (gender or age group) of the suspicious person, and the like. Furthermore, it is also conceivable to monitor an empty space in a town or a parking lot and notify the user of a location of a space where the vehicle can be parked.

In the following description, the various apparatuses can be roughly divided into a cloud-side information processing apparatus and an edge-side information processing apparatus. The cloud server 1 and the management server 4 correspond to the cloud-side information processing apparatus, and the cloud-side information processing apparatus is an apparatus group that provides services assumed to be used by a plurality of users.

In addition, the camera 3 corresponds to the edge-side information processing apparatus, and the edge-side information processing apparatus can be regarded as an apparatus group arranged in an environment prepared by a user who uses a cloud service.

However, both the cloud-side information processing apparatus and the edge-side information processing apparatus may be in an environment prepared by the same user.

Note that each camera 3 may be connected to the network 5 via a fog server. In a case where the fog server is provided, each camera 3 is configured to be able to perform data communication with the fog server, and can transmit various kinds of data to the fog server or receive various kinds of data transmitted from the fog server.

The fog server corresponds to the edge-side information processing apparatus, and is assumed to be used to generate the analysis information of the subject, instead of the cloud server 1.

The fog server is assumed to be arranged for each monitoring target, for example, arranged in the store as the monitoring target together with each camera 3 in the above-described application of monitoring the store. By providing the fog server for each monitoring target such as a store in this manner, the cloud server 1 does not need to directly receive transmission data from the plurality of cameras 3 in the monitoring target, and a processing load on the cloud server 1 is reduced.

Note that in a case where there is a plurality of stores as the monitoring target and all the stores belong to the same series, one fog server may be provided for the plurality of stores instead of being provided for each store. That is, one fog server is not limited to being provided for each monitoring target, and one fog server may be provided for a plurality of monitoring targets. Note that the fog server may be an on-premises server.

### <1-2. Registration of AI Model and AI Application>

As described above, in the information processing system 100, in the camera 3 that is the edge-side information processing apparatus, the AI image processing is performed, and in the cloud server 1 that is the cloud-side information processing apparatus, an advanced application function is realized using the result information of the AI image processing on the edge side (for example, the result information of the image recognition processing using AI).

Here, various methods of registering an application function in the cloud server 1 that is the cloud-side information processing apparatus can be considered. Examples will be described in detail with reference to Fig. 2.

The cloud server 1 and the management server 4 described above are the information processing apparatuses constituting an environment on a cloud side. In addition, the camera 3 is the information processing apparatus constituting an environment on an edge side.

Note that the camera 3 can be regarded as an apparatus including a control unit that performs overall control of the camera 3, and the camera 3 can be regarded as an apparatus including another apparatus as an image sensor IS including an arithmetic processing unit that performs various types of processing including AI image processing on the captured image. That is, it may be considered that the image sensor IS, which is another edge-side information processing apparatus, is mounted inside of the camera 3 that is the edge-side information processing apparatus.

In addition, examples of the user terminal 2 used by the user who uses various services provided by the cloud-side information processing apparatus include an application developer terminal 2A used by the user who develops an application used for AI image processing, an application user terminal 2B used by the user who uses the application, and an AI model developer terminal 2C used by the user who develops an AI model used for AI image processing. Note that, of course, the application developer terminal 2A may be used by a user who develops an application that does not use AI image processing.

In the cloud-side information processing apparatus, a learning data set for performing learning by AI is prepared. The user who develops the AI model performs communication with the cloud-side information processing apparatus using the AI model developer terminal 2C, and downloads the learning data set. At this time, the learning data set may be provided for a fee. For example, the AI model developer may purchase the learning data set in a state of enabling purchase of various functions and materials registered in a marketplace (electronic market) prepared as a cloud-side function by registering personal information in the marketplace.

After developing the AI model using the learning data set, the AI model developer registers the developed AI model in the marketplace by using the AI model developer terminal 2C. As a result, an incentive may be paid to the AI model developer when the AI model is downloaded.

In addition, a user who develops an application (application development user) downloads the AI model from the marketplace by using the application developer terminal 2A, and develops an application (hereinafter, described as "AI application") using the AI model. At this time, as described above, an incentive may be paid to the AI model developer.

The application development user registers the developed AI application in the marketplace by using the application developer terminal 2A. As a result, an incentive may be paid to the user who has developed the AI application when the application is downloaded.

The user who uses the AI application (application-using user) performs an operation for deploying the AI application and the AI model from the marketplace to the camera 3 as the edge-side information processing apparatus managed by the user, by using the application user terminal 2B. At this time, an incentive may be paid to the AI model developer. When the AI application and the AI model are deployed in the camera 3, AI image processing using the AI application and the AI model can be performed in the camera 3, and not only an image can be captured, but also customer detection and vehicle detection can be performed by the AI image processing.

Here, the deployment of the AI application and the AI model indicates that the AI application and the AI model are installed on the target as an execution subject such that the target (apparatus) as the execution subject can use the AI application and the AI model, in other words, at least a part of the program as the AI application can be executed.

In addition, in the camera 3, attribute information of a customer may be extractable from the captured image captured by the camera 3 by the AI image processing. These pieces of attribute information are transmitted from the camera 3 to the cloud-side information processing apparatus via the network 5.

A cloud application is deployed in the cloud-side information processing apparatus, and each user can use the cloud application via the network 5. Then, in the cloud application, an application that analyzes a traffic line of a customer by using the attribute information or the captured image of the customer is prepared. Such a cloud application is uploaded by an application development user or the like.

By using the cloud application for a traffic line analysis by using the application user terminal 2B, the application-using user can perform the traffic line analysis of the customer for the user's own store and browse the analysis result. The browsing of the analysis result is performed, for example, by graphically presenting the traffic line of the customer on a map of the store. In addition, the browsing of the analysis result may be performed by displaying the result of the traffic line analysis in a form of a heatmap and presenting the density of customers or the like. In addition, these pieces of information may be displayed in a categorized manner according to the attribute information of the customers.

In the marketplace on the cloud side, an AI model optimized for each user may be registered. For example, a captured image captured by the camera 3 arranged in a store managed by a certain user is appropriately uploaded and accumulated in the cloud-side information processing apparatus.

In the cloud-side information processing apparatus, each time a certain number of uploaded captured images are accumulated, relearning processing of the AI model is performed, and processing of updating the AI model and re-registering the AI model in the marketplace is executed. Note that the relearning processing of the AI model may be selected as an option by the user on the marketplace, for example.

For example, the AI model retrained using dark images from the camera 3 arranged in the store is deployed in the camera 3, and thereby a recognition rate of the image processing for the captured image captured in a dark place can be improved. In addition, the AI model retrained using bright images from the camera 3 arranged outside of the store is deployed in the camera 3, and thereby a recognition rate of the image processing for the image captured in a bright place can be improved. That is, the application-using user can always obtain the optimized processing result information by deploying the updated AI model in the camera 3 again. Note that the relearning processing of the AI model will be described later again.

In addition, in a case where the personal information is included in the information (captured image or the like) uploaded from the camera 3 to the cloud-side information processing apparatus, data from which the information related to privacy has been deleted may be uploaded from the viewpoint of privacy protection, or the data from which the information related to privacy has been deleted may be made available to an AI model development user or the application development user.

The flow of the above-described processing is illustrated in flowcharts in Figs. 3 and 4. Note that the cloud-side information processing apparatus corresponds to the cloud server 1, the management server 4, and the like in Fig. 1.

In response to the AI model developer browsing a list of data sets registered in the marketplace and selecting a desired data set by using the AI model developer terminal 2C having a display unit including a liquid crystal display (LCD), an organic electro luminescence (EL) panel, or the like, the AI model developer terminal 2C transmits a download request of the selected data set to the cloud-side information processing apparatus in step S21 (Fig. 3).

In response to this, the cloud-side information processing apparatus accepts the request in step S1, and performs processing of transmitting the requested data set to the AI model developer terminal 2C in step S2.

In step S22, the AI model developer terminal 2C performs processing of receiving a data set. As a result, the AI model developer can develop the AI model using the data set.

After the AI model developer finishes developing the AI model, when the AI model developer performs an operation for registering the developed AI model in the marketplace (for example, designating the name of the AI model, the address at which the AI model is placed, or the like), the AI model developer terminal 2C transmits a registration request of the AI model in the marketplace to the cloud-side information processing apparatus in step S23.

In response to this, the cloud-side information processing apparatus can display the AI model on the marketplace, for example, by accepting the registration request in step S3 and performing the registration processing of the AI model in step S4. As a result, a user other than the AI model developer can download the AI model from the marketplace.

For example, an application developer who intends to develop an AI application browses a list of AI models registered in the marketplace by using the application developer terminal 2A. In response to the operation (for example, an operation of selecting one of AI models on the marketplace) of the application developer, the application developer terminal 2A transmits a download request of the selected AI model to the cloud-side information processing apparatus in step S31.

The cloud-side information processing apparatus accepts the request in step S5, and transmits the AI model to the application developer terminal 2A in step S6.

In step S32, the application developer terminal 2A receives the AI model. As a result, the application developer can develop an AI application using the AI model developed by another person.

After the application developer finishes developing the AI application, when the application developer performs an operation for registering the AI application in the marketplace (for example, an operation of designating the name of the AI application, the address at which the AI model is placed, or the like), the application developer terminal 2A transmits a registration request of the AI application to the cloud-side information processing apparatus in step S33.

The cloud-side information processing apparatus can display the AI application on the marketplace, for example, by accepting the registration request in step S7 and registering the AI application in step S8. As a result, a user other than the application developer can select and download the AI application on the marketplace.

Next, in the camera 3, setup is performed in step S51 (Fig. 4). In the setup of the camera 3, a two-dimensional code (for example, a QR code (registered trademark)) is captured using the image sensor IS, and the two-dimensional code appearing in the captured image is analyzed, whereby connection destination information indicating a connection destination of the camera 3 is acquired. Here, for example, the management server 4 is the connection destination. In the storage of the management server 4, for example, firmware (FW) for the camera 3 to execute an AI application or the like is stored. The camera 3 acquires the FW from the storage of the management server 4, and updates the FW to the FW, whereby the setup of the camera 3 is completed.

Note that the details of the setup of the camera 3 will be described later again.

After the setup of the camera 3 is completed, the application user terminal 2B performs purpose selection in step S41 according to the operation by the user who intends to use the AI application. In the purpose selection, the selected purpose is transmitted to the cloud-side information processing apparatus.

In response to this, the cloud-side information processing apparatus selects the AI application according to the purpose in step S9, and performs preparation processing (deployment preparation processing) for deploying the AI application or the AI model to each apparatus in step S10. In the deployment preparation processing, which apparatus is to execute each software (SW) component constituting the AI application for realizing the function desired by the user is determined.

Each SW component may be a container to be described later, or may be a microservice. Note that the SW component can also be realized by using a web assembly technology.

In the case of an AI application that counts the number of customers for each attribute such as gender and age, a SW component that detects a face of a person from a captured image using an AI model, a SW component that extracts attribute information of a person from a detection result of the face, a SW component that aggregates the results, a SW component that visualizes an aggregation result, and the like are included.

In step S11, the cloud-side information processing apparatus performs processing of deploying each SW component in each apparatus. In this processing, the AI application and the AI model are transmitted to each apparatus such as the camera 3.

In response to this, in the camera 3, deployment processing of the AI application and the AI model is performed in step S52. As a result, AI image processing can be performed on the captured image captured by the camera 3. Note that, in a case where a fog server is provided, similarly in the fog server, deployment processing of the AI application and the AI model is performed as necessary.

However, in a case where all the types of processing are executed in the camera 3, the deployment processing for the fog server is not performed.

In step S53, the camera 3 acquires an image (captured image) by performing an imaging operation. Then, in step S54, the camera 3 performs AI image processing on the acquired captured image, and obtains, for example, an image recognition result.

In step S55, the camera 3 performs transmission processing of the captured image and the result information of the AI image processing. In the information transmission in step S55, both the captured image and the result information of the AI image processing may be transmitted, or only one of the captured image and the result information of the AI image processing may be transmitted.

The cloud-side information processing apparatus that has received these pieces of information performs analysis processing in step S12. By this analysis processing, for example, traffic line analysis of the customer, vehicle analysis processing for traffic monitoring, and the like are performed.

In step S13, the cloud-side information processing apparatus performs presentation processing of the analysis result. This processing is realized, for example, by the user using the cloud application described above.

Upon receiving the presentation processing of the analysis result, the application user terminal 2B performs processing of displaying the analysis result on a monitor or the like in step S42.

With the processing so far, the user who is a user of the AI application can obtain the analysis result according to the purpose selected in step S41.

Note that, in the cloud-side information processing apparatus, the AI model may be updated after step S13. By updating and deploying the AI model, it is possible to obtain the analysis result suitable for the use environment of the user.

### <1-3. Outline of Functions of Information Processing System>

In the present embodiment, as a service using the information processing system 100, a service in which a user as a customer can select a type of function for AI image processing of each camera 3 is assumed. For the selection of the type of function, for example, an image recognition function, an image detection function, or the like may be selected, or a more detailed type may be selected so as to exhibit an image recognition function or an image detection function for a specific subject.

For example, as a business model, the service provider sells the camera 3 or the fog server having an image recognition function by AI to the user, and causes the camera 3 or the fog server to be installed at a place as the monitoring target. Then, a service for providing the above-described analysis information to the user is deployed.

At this time, since the application required for the system is different for each customer, such as the application of store monitoring and the application of traffic monitoring, it is possible to selectively set an AI image processing function of the camera 3 such that analysis information corresponding to the application required by the customer can be obtained. In addition, in a case where the authentication of the camera 3 succeeds so that only an authorized user who has purchased the camera 3 can use the camera 3, the setup of the camera 3 can be performed.

In this example, the management server 4 has a function of authenticating the camera 3. Note that the cloud server 1 or the fog server may have the function of the management server 4.

Here, connection between the cloud server 1 and the management server 4, which are cloud-side information processing apparatuses, and the camera 3, which is an edge-side information processing apparatus, will be described with reference to Fig. 5.

In the cloud-side information processing apparatus, a relearning function, a device management function, and a marketplace function, which are functions available via the Hub, are implemented.

The Hub performs highly reliable communication protected by security with respect to the edge-side information processing apparatus. As a result, various functions can be provided to the edge-side information processing apparatus.

The relearning function is a function of performing relearning and providing a newly optimized AI model, whereby an appropriate AI model based on a new learning material is provided.

The device management function is a function of managing the camera 3 and the like as the edge-side information processing apparatus, and can provide, for example, functions such as management and monitoring of the AI model deployed in the camera 3, and detection and troubleshooting of problems.

In addition, the device management function is also a function of managing information of the camera 3 and the fog server. The information of the camera 3 and the fog server is information of a chip used as an arithmetic processing unit, information such as a memory capacity and a storage capacity, and a usage rate of a CPU and a memory, and information of software such as an operating system (OS) installed in each apparatus.

In addition, the device management function protects secure access by authenticated users.

The marketplace function provides a function of registering the AI model developed by the above-described AI model developer and the AI application developed by the application developer, a function of deploying these developments to the permitted edge-side information processing apparatus, and the like. In addition, the marketplace function also provides a function related to payment of an incentive according to deployment of the developments.

The camera 3 as the edge-side information processing apparatus includes an edge runtime, an AI application, an AI model, and an image sensor IS.

The edge runtime functions as embedded software for managing an application deployed in the camera 3 and communicating with a cloud-side information processing apparatus.

As described above, the AI model and the AI application are obtained by deploying the AI model and the AI application registered in the marketplace in the cloud-side information processing apparatus, and thus, the camera 3 can obtain the result information of the AI image processing according to the purpose using the captured image.

An outline of the functional configurations of the cloud server 1 and the management server 4 will be described with reference to Fig. 6.

As illustrated in A of Fig. 6, the cloud server 1 includes an account service unit 11, a device monitoring unit 12, a marketplace unit 13, and a camera service unit 14.

The account service unit 11 has a function of generating and managing account information of the user. The account service unit 11 accepts an input of user information, and generates account information on the basis of the input user information (generates account information including at least a user ID and password information).

In addition, the account service unit 11 accepts an input of network information or the like for the camera 3 to be connected to the network 5, and generates a two-dimensional code used for the setup of the camera 3 on the basis of the input information or the like.

Furthermore, the account service unit 11 also performs registration processing (registration of account information) for the AI model developer and the developer of the AI application (hereinafter, also abbreviated as "software developer").

The device monitoring unit 12 has a function of performing processing for monitoring a use state of the camera 3. For example, information such as the usage rate of the CPU and the memory described above is monitored as various elements related to the use state of the camera 3, such as a usage location of the camera 3, an output frequency of output data of the AI image processing, and a free space of the CPU and the memory used for the AI image processing.

The marketplace unit 13 has a function for selling an AI model and an AI application. For example, the user can purchase an AI application and an AI model used by an AI application via a sales WEB site (sales site) provided by the marketplace unit 13. In addition, the software developer can purchase an AI model for creating an AI application via the sales site described above.

The camera service unit 14 has a function for providing a service related to use of the camera 3 to the user. As one of the functions of the camera service unit 14, for example, a function related to generation of the analysis information described above can be exemplified. That is, the camera service unit 14 generates the analysis information of the subject on the basis of the processing result information of the image processing in the camera 3, and performs processing for allowing the user to browse the generated analysis information via the user terminal 2.

In addition, the functions of the camera service unit 14 include an imaging setting search function. Specifically, this imaging setting search function is a function of acquiring recognition result information of AI image processing from the camera 3, and searching the imaging setting information of the camera 3 using AI on the basis of the acquired recognition result information. Here, the imaging setting information broadly means setting information related to an imaging operation for obtaining a captured image. Specifically, it widely includes optical settings such as a focus and a diaphragm, settings related to a readout operation of a captured image signal such as a frame rate, an exposure time, and a gain, and settings related to image signal processing on the read captured image signal, such as gamma correction processing, noise reduction processing, and super-resolution processing.

In addition, the functions of the camera service unit 14 also include an AI model search function. This AI model search function is a function of acquiring recognition result information of AI image processing from the camera 3 and searching for an optimal AI model to be used for AI image processing in the camera 3 using AI on the basis of the acquired recognition result information. The search for the AI model here means, for example, processing of optimizing various processing parameters such as a weighting factor, setting information (for example, including information of a kernel size) related to a neural network structure, and the like in a case where AI image processing is realized by a convolutional neural network (CNN) including a convolution operation.

In addition, the functions of the camera service unit 14 also include a processing sharing determination function. In the processing sharing determination function, when the AI application is deployed in the edge-side information processing apparatus, processing of determining an apparatus as a deployment destination in units of SW components is performed as the deployment preparation processing described above. Note that some SW components may be determined to be executed in the apparatus on the cloud side, and in this case, the deployment processing may not be performed assuming that some SW components have already been deployed in the apparatus on the cloud side.

For example, as in the above-described example, in the case of the AI application including the SW component that detects a face of a person, the SW component that extracts attribute information of a person, the SW component that aggregates the extraction result, and the SW component that visualizes the aggregation result, the camera service unit 14 determines the image sensor IS of the camera 3 as the apparatus as the deployment destination, for the SW component that detects a face of a person, determines the camera 3 as the apparatus as the deployment destination, for the SW component that extracts attribute information of a person, determines the fog server as the apparatus as the deployment destination, for the SW component that aggregates the extraction result, and determines that the SW component that visualizes the aggregation result is executed in the cloud server 1 without newly deploying the SW component to the apparatus.

By having the imaging setting search function and the AI model search function as described above, it is possible to perform imaging setting that makes the result of AI image processing favorable, and to perform AI image processing using an appropriate AI model according to the actual use environment. In addition, by having the processing sharing determination function, AI image processing and analysis processing thereof can be executed in an appropriate apparatus.

Note that the camera service unit 14 has an application setting function. The application setting function is a function of setting an appropriate AI application according to the purpose of the user. For example, the camera service unit 14 selects an appropriate AI application in response to the user selecting the application such as store monitoring or traffic monitoring. As a result, the SW component constituting the AI application is also naturally determined.

In the application setting function, processing of accepting an operation of selecting the purpose (application) by the user in the user terminal 2 (corresponding to the application user terminal 2B in Fig. 2), processing of selecting an appropriate AI application according to the selected application, and the like are performed.

Next, as illustrated in B of Fig. 6, the management server 4 includes a license authorization unit 21 and a storage 22.

The license authorization unit 21 has a function of performing processing related to various types of authentications. Specifically, the license authorization unit 21 performs processing related to authentication of each camera 3 and processing related to authentication of each of the AI model, the SW, and the FW used by the camera 3.

Here, the above-described SW means SW necessary for appropriately realizing the AI image processing in the camera 3. In order to appropriately perform AI image processing based on the captured image and transmit the result of the AI image processing to the fog server or the cloud server 1 in an appropriate format, it is required to control data input to the AI model and appropriately process output data of the AI model. The SW described above is SW including peripheral processing necessary for appropriately realizing the AI image processing. Such SW is SW for realizing a desired function using an AI model, and corresponds to the above-described AI application.

Note that the AI application is not limited to one using only one AI model, and one using two or more AI models is also conceivable. For example, there may be an AI application having a flow of processing in which information (image data and the like, hereinafter referred to as "recognition result information") of a recognition result obtained by an AI model that executes AI image processing with a captured image as input data is input to another AI model and second AI image processing is executed.

For the authentication of the camera 3, in the license authorization unit 21, in a case where the license authorization unit 21 and the camera 3 are connected via the network 6, processing of collating the device information unique to the camera 3 transmitted from the camera 3 with the device information registered in advance is performed. The device information of the camera 3 purchased by the user is registered in the license authorization unit 21 in association with the user, for example.

In addition, regarding the authentication of the AI model and the SW, processing of issuing unique IDs (AI model ID, software ID) is performed for each of the AI application and the AI model applied for registration from the application developer terminal 2A and the AI model developer terminal 2C.

In addition, in the license authorization unit 21, processing of issuing various keys, certificates, and the like for enabling secure communication between the camera 3, the application developer terminal 2A, the AI model developer terminal 2C, and the like, and the cloud server 1, to a manufacturer of the camera 3 (particularly, a manufacturer of the image sensor IS to be described later), an AI application developer, an AI model developer, and the like is performed, and also processing for updating or stopping the certificate validity is performed.

The storage 22 stores FW downloaded by the camera 3 at the time of setup.

### <1-4. Configuration of Camera>

Fig. 7 is a block diagram illustrating a configuration example of the camera 3.

As illustrated in Fig. 7, the camera 3 includes an imaging optical system 31, an optical system drive unit 32, an image sensor IS, a control unit 33, a memory unit 34, and a communication unit 35. The image sensor IS, the control unit 33, the memory unit 34, and the communication unit 35 are connected via a bus 36, and can perform data communication with each other.

The imaging optical system 31 includes lenses such as a cover lens, a zoom lens, and a focus lens, and a diaphragm (iris) mechanism. Light (incident light) from the subject is guided by the imaging optical system 31, and condensed on a light receiving surface of the image sensor IS.

The optical system drive unit 32 comprehensively indicates drive units of the zoom lens, the focus lens, and the diaphragm mechanism included in the imaging optical system 31. Specifically, the optical system drive unit 32 includes an actuator for driving each of the zoom lens, the focus lens, and the diaphragm mechanism, and a driving circuit of the actuator.

The control unit 33 includes, for example, a microcomputer including a CPU, a ROM, and a RAM, and performs overall control of the camera 3 by the CPU executing various types of processing according to a program stored in the ROM or a program loaded in the RAM.

In addition, the control unit 33 gives driving instructions for the zoom lens, the focus lens, the diaphragm mechanism, and the like, to the optical system drive unit 32. The optical system drive unit 32 executes movement of the focus lens and the zoom lens, opening and closing of diaphragm blades of the diaphragm mechanism, and the like according to these driving instructions.

In addition, the control unit 33 controls writing and reading of various kinds of data to and from the memory unit 34. The memory unit 34 is a nonvolatile storage device such as a hard disk drive (HDD) or a flash memory device, for example, and is used as a storage destination (recording destination) of image data output from the image sensor IS.

Furthermore, the control unit 33 performs various kinds of data communication with an external apparatus via the communication unit 35. The communication unit 35 in the present example is configured to be able to perform data communication with at least the cloud server 1 illustrated in Fig. 1.

The image sensor IS is configured as, for example, a CCD or CMOS image sensor.

The image sensor IS includes an imaging unit 41, an image signal processing unit 42, an in-sensor control unit 43, an AI image processing unit 44, a memory unit 45, and a communication I/F 46, and these units can perform data communication with each other via a bus 47.

The imaging unit 41 includes a pixel array unit in which pixels each having a photoelectric conversion element such as a photodiode are two-dimensionally arranged, and a reading circuit that reads an electric signal obtained by photoelectric conversion from each pixel included in the pixel array unit, and can output the electric signal as a captured image signal.

The reading circuit executes, for example, correlated double sampling (CDS) processing, automatic gain control (AGC) processing, and the like on the electric signal obtained by photoelectric conversion, and further performs analog/digital (A/D) conversion processing.

The image signal processing unit 42 performs preprocessing, synchronization processing, YC generation processing, resolution conversion processing, codec processing, and the like on the captured image signal as digital data after the A/D conversion processing. In the preprocessing, clamp processing of clamping the black levels of R, G, and B to a predetermined level, correction processing between the color channels of R, G, and B, and the like are performed on the captured image signal. In the synchronization processing, color separation processing is performed such that the image data for each pixel has all the R, G, and B color components. For example, in the case of an imaging element using a Bayer array color filter, demosaic processing is performed as color separation processing. In the YC generation processing, a luminance (Y) signal and a color (C) signal are generated (separated) from the R, G, and B image data. In the resolution conversion processing, the resolution conversion processing is executed on the image data subjected to various types of signal processing.

In the codec processing, for example, encoding processing for recording or communication and file generation are performed on the image data subjected to the above-described various types of processing. In the codec processing, it is possible to perform file generation in a format such as Moving Picture Experts Group (MPEG)-2 or H.264 as a moving image file format. In addition, it is also conceivable to perform file generation in a format such as Joint Photographic Experts Group (JPEG), Tagged Image File Format (TIFF), or Graphics Interchange Format (GIF) as a still image file.

The in-sensor control unit 43 performs execution control of the imaging operation by issuing an instruction to the imaging unit 41. Similarly, execution control of processing is also performed on the image signal processing unit 42.

The AI image processing unit 44 performs image recognition processing as AI image processing on the captured image.

The image recognition function using AI can be realized using a programmable arithmetic processing apparatus such as a CPU, a field programmable gate array (FPGA), or a digital signal processor (DSP).

The image recognition function that can be realized by the AI image processing unit 44 can be switched by changing the algorithm of the AI image processing. In other words, the function type of the AI image processing can be switched by switching the AI model used for the AI image processing. Various types of functions of the AI image processing can be considered, and for example, types as exemplified below can be exemplified.
- Class Identification
- Semantic Segmentation
- Person Detection
- Vehicle Detection
- Target Tracking
- Optical Character Recognition (OCR)

Among the above function types, the class identification is a function of identifying a class of a target. The "class" here is information indicating a category of an object, and distinguishes, for example, "person", "car", "airplane", "ship", "truck", "bird", "cat", "dog", "deer", "frog", "horse", and the like. The target tracking is a function of tracking a subject that is a target, and can be said to be a function of obtaining history information of a position of the subject.

The memory unit 45 is used as a storage destination of various kinds of data such as captured image data obtained by the image signal processing unit 42. In addition, in the present example, the memory unit 45 can also be used for temporary storage of data used by the AI image processing unit 44 in the course of AI image processing.

In addition, the memory unit 45 stores information of the AI application or the AI model used in the AI image processing unit 44.

Note that the information of the AI application and the AI model may be deployed in the memory unit 45 as a container or the like using a container technology to be described later, or may be deployed using a microservice technology. By deploying the AI model used for the AI image processing in the memory unit 45, it is possible to change the function type of the AI image processing or change the AI model to an AI model with improved performance by relearning.

Note that, as described above, in the present embodiment, the description has been made based on the example of the AI model and the AI application used for image recognition, but the present invention is not limited thereto, and a program executed using the AI technology or the like may be targeted.

In addition, in a case where the capacity of the memory unit 45 is small, the information of the AI application and the AI model may be deployed in a memory outside of the image sensor IS, such as the memory unit 34, as a container or the like by using the container technology, and then only the AI model may be stored in the memory unit 45 in the image sensor IS via the communication I/F 46 described below.

The communication I/F 46 is an interface that performs communication with the control unit 33, the memory unit 34, and the like outside of the image sensor IS. The communication I/F 46 performs communication for acquiring a program executed by the image signal processing unit 42, an AI application or an AI model used by the AI image processing unit 44, and the like from the outside, and stores the program, the AI application, the AI model, and the like in the memory unit 45 included in the image sensor IS. As a result, the AI model is stored in a part of the memory unit 45 included in the image sensor IS, and can be used by the AI image processing unit 44.

The AI image processing unit 44 performs recognition of the subject according to the purpose by performing predetermined image recognition processing using the AI application or the AI model obtained in this manner.

The recognition result information of the AI image processing is output to the outside of the image sensor IS via the communication I/F 46.

That is, not only the image data output from the image signal processing unit 42 but also the recognition result information of the AI image processing is output from the communication I/F 46 of the image sensor IS. Note that only one of the image data and the recognition result information can be output from the communication I/F 46 of the image sensor IS.

For example, in a case where the relearning function of the AI model described above is used, captured image data used for the relearning function is uploaded from the image sensor IS to the cloud-side information processing apparatus via the communication I/F 46 and the communication unit 35.

In addition, in a case where inference using an AI model is performed, recognition result information of the AI image processing is output from the image sensor IS to another information processing apparatus outside of the camera 3 via the communication I/F 46 and the communication unit 35.

Various configurations of the image sensor IS can be considered. Here, an example in which the image sensor IS has a structure in which two layers are stacked will be described.

As illustrated in Fig. 8, the image sensor IS is configured as a one-chip semiconductor device in which two dies are stacked.

The image sensor IS has a configuration in which a die D1 having a function as the imaging unit 41 (Fig. 7) and a die D2 including the image signal processing unit 42, the in-sensor control unit 43, the AI image processing unit 44, the memory unit 45, and the communication I/F 46 are stacked.

The die D1 and the die D2 are electrically connected by, for example, Cu-Cu bonding.

Various methods of deploying an AI model, an AI application, and the like in the camera 3 can be considered. As an example, an example using a container technology will be described.

As illustrated in Fig. 9, in the camera 3, an operation system 51 is installed on various types of hardware 50 such as a CPU, a graphics processing unit (GPU), a ROM, and a RAM as the control unit 33 (Fig. 7).

The operation system 51 is basic software that performs overall control of the camera 3 in order to realize various functions in the camera 3.

General-purpose middleware 52 is installed on the operation system 51.

The general-purpose middleware 52 is, for example, software for realizing basic operations such as a communication function using the communication unit 35 as the hardware 50 and a display function using a display unit (monitor or the like) as the hardware 50.

On the operation system 51, not only the general-purpose middleware 52 but also an orchestration tool 53 and a container engine 54 are installed.

The orchestration tool 53 and the container engine 54 deploy and execute a container 55 by constructing a cluster 56 as an operation environment of the container 55. Note that the edge runtime illustrated in Fig. 5 corresponds to the orchestration tool 53 and the container engine 54 illustrated in Fig. 9.

The orchestration tool 53 has a function for causing the container engine 54 to appropriately allocate the resources of the hardware 50 and the operation system 51 described above. Each container 55 is put together in a predetermined unit (pod to be described later) by the orchestration tool 53, and each pod is deployed to a worker node (to be described later) which is a logically different area.

The container engine 54 is one of middleware installed on the operation system 51, and is an engine that operates the container 55. Specifically, the container engine 54 has a function of allocating resources (memory, operation capability, and the like) of the hardware 50 and the operation system 51 to the container 55 on the basis of a setting file or the like included in the middleware in the container 55.

In addition, the resources allocated in the present embodiment include not only resources such as the control unit 33 included in the camera 3 but also resources such as the in-sensor control unit 43, the memory unit 45, and the communication I/F 46 included in the image sensor IS.

The container 55 includes an application for realizing a predetermined function and middleware such as a library. The container 55 is operated to realize predetermined functions using the resources of the hardware 50 and the operation system 51 allocated by the container engine 54.

In the present embodiment, the AI application and the AI model illustrated in Fig. 5 correspond to one of the containers 55. That is, one of the various containers 55 deployed in the camera 3 realizes a predetermined AI image processing function using the AI application and the AI model.

A specific configuration example of the cluster 56 constructed by the container engine 54 and the orchestration tool 53 will be described with reference to Fig. 10. Note that the cluster 56 may be constructed across a plurality of kinds of equipment such that functions are realized using not only the hardware 50 included in one camera 3 but also resources of other hardware included in other apparatuses.

The orchestration tool 53 performs management of an execution environment of the container 55 in units of worker nodes 57. In addition, the orchestration tool 53 constructs a master node 58 that manages the entire worker node 57.

In the worker node 57, a plurality of pods 59 are deployed. The pod 59 includes one or a plurality of containers 55, and realizes a predetermined function. The pod 59 is a management unit for managing the container 55 by the orchestration tool 53.

The operation of the pod 59 in the worker node 57 is controlled by a pod management library 60.

The pod management library 60 includes a container runtime for causing the pod 59 to use a logically allocated resource of the hardware 50, an agent that accepts control from the master node 58, a network proxy that performs communication between the pods 59 and communication with the master node 58, and the like. That is, each pod 59 can realize a predetermined function using each resource by the pod management library 60.

The master node 58 includes an application server 61 that deploys the pod 59, a manager 62 that manages a deployment situation of the container 55 by the application server 61, a scheduler 63 that determines the worker node 57 in which the container 55 is disposed, and a data sharing unit 64 that performs data sharing.

By using the configurations illustrated in Figs. 9 and 10, the above-described AI application and AI model can be deployed in the image sensor IS of the camera 3 using the container technology. Note that, as described above, the AI model may be stored in the memory unit 45 in the image sensor IS via the communication I/F 46 in Fig. 7, and the AI image processing may be executed in the image sensor IS. Alternatively, the configurations illustrated in Figs. 9 and 10 may be deployed in the memory unit 45 and the in-sensor control unit 43 in the image sensor IS, and the above-described AI application and AI model may be executed in the image sensor IS using the container technology.

In addition, even in a case where an AI application and/or an AI model is deployed in a fog server or a cloud-side information processing apparatus, the container technology can be used. At that time, the information of the AI application or the AI model is deployed and executed as the container or the like in the memory such as a nonvolatile memory unit 74, a storage unit 79, or a RAM 73 in Fig. 11 to be described later.

### <1-5. Hardware Configuration of Information Processing Apparatus>

A hardware configuration of the information processing apparatus such as the cloud server 1, the user terminal 2, and the management server 4 included in the information processing system 100 will be described with reference to Fig. 11.

The information processing apparatus includes a CPU 71. The CPU 71 functions as an arithmetic processing unit that performs various types of processing described above, and executes various types of processing according to a program stored in the nonvolatile memory unit 74 such as a ROM 72 or an Electrically Erasable Programmable Read-Only Memory (EEP-ROM), or a program loaded from the storage unit 79 to the RAM 73. The RAM 73 also appropriately stores data and the like necessary for the CPU 71 to execute various types of processing.

Note that the CPU 71 included in the information processing apparatus as the cloud server 1 functions as the account service unit 11, the device monitoring unit 12, the marketplace unit 13, and the camera service unit 14 described above. In addition, the CPU 71 included in the information processing apparatus as the management server 4 functions as the license authorization unit 21 described above.

The CPU 71, the ROM 72, the RAM 73, and the nonvolatile memory unit 74 are connected to one another via a bus 83. An input/output interface (I/F) 75 is also connected to the bus 83.

An input unit 76 constituted by an operator or an operation device is connected to the input/output interface 75. For example, various types of operators or operation devices, such as a keyboard, a mouse, keys, a dial, a touch panel, a touch pad, and a remote controller, are conceivable as the input unit 76. A user's operation is detected by the input unit 76 and a signal in accordance with an input operation is analyzed by the CPU 71.

In addition, a display unit 77 constituted by an LCD, an organic EL panel, or the like, and a sound output unit 78 constituted by a speaker or the like are connected to the input/output interface 75 as one body or separate bodies. The display unit 77 is a display unit that provides various kinds of display, and is configured with, for example, a display device provided in the housing of the information processing apparatus or a separate display device connected to the information processing apparatus.

The display unit 77 displays images for various types of image processing and moving images as the processing target, on a display screen in response to an instruction from the CPU 71. The display unit 77 also provides display as a graphical user interface (GUI), for example, various operation menus, icons, and messages in response to an instruction from the CPU 71.

In some cases, the storage unit 79 including a hard disk and a solid-state memory or a communication unit 80 including a modem are connected to the input/output interface 75. Note that the storage unit 79 included in the information processing apparatus as the management server 4 functions as the storage 22 described above.

The communication unit 80 performs communication processing over a transmission path such as the Internet, communication such as wired/wireless communication or bus communication with various kinds of equipment, and the like.

A drive 81 is also connected to the input/output interface 75 as necessary, and a removable medium 82 such as a magnetic disk, an optical disc, a magneto-optical disc, or a semiconductor memory is mounted in the drive 81 as appropriate.

The drive 81 can be used to read out data files such as programs used for each instance of processing from the removable medium 82. The read data files are stored in the storage unit 79, images or sounds included in the data files are output to the display unit 77 or the sound output unit 78, and the like. In addition, computer programs or the like read from the removable medium 82 are installed in the storage unit 79 as necessary.

In the information processing apparatus, for example, software for the processing in the present embodiment can be installed through the network communication using the communication unit 80 or through the removable medium 82. Alternatively, the software may be stored in advance in the ROM 72 or the storage unit 79 or the like. In addition, a captured image captured by the camera 3 or a processing result by AI image processing may be received and stored in the removable medium 82 via the storage unit 79 or the drive 81.

By the CPU 71 performing processing operations based on various programs, necessary information processing and communication processing as the cloud server 1 that is the information processing apparatus including the above-described arithmetic processing unit are executed.

Note that the cloud server 1 is not limited to having a single information processing apparatus as illustrated in Fig. 11, and may have a configuration in which a plurality of information processing apparatuses are systematized. The plurality of information processing apparatuses may be systematized by a local area network (LAN) or the like, or may be arranged in a remote place by a virtual private network (VPN) or the like using the Internet or the like. The plurality of information processing apparatuses may include an information processing apparatus as a server group (cloud) usable by a cloud computing service.

### <2. Regarding Camera Setup>

Fig. 12 is a diagram illustrating a configuration of each apparatus related to the setup of the camera 3.

As illustrated in Fig. 12, the setup of the camera 3 is realized up by the application user terminal 2B, the camera 3, and the account service unit 11, the license authorization unit 21, and the storage 22 of the cloud-side information processing apparatus.

The camera 3 is provided with an application processor (AP) 91. The AP 91 illustrated in Fig. 12 corresponds to, for example, the control unit 33 illustrated in Fig. 7.

The AP 91 can communicate with the license authorization unit 21 and the storage, and the application user terminal 2B can communicate with the account service unit 11.

A detailed flow of the setup of the camera 3 (step S51 in Fig. 4) will be described with reference to Figs. 13 to 15.

First, as indicated by an arrow #1 in Fig. 13, the account service unit 11 generates a two-dimensional code C1 used for the setup of the camera 3, and provides the two-dimensional code C1 to the user. The two-dimensional code C1 stores, for example, connection destination information and network information.

In the generation of the two-dimensional code, the application user terminal 2B accesses a URL prepared for each user or performs login using the account information of the user, thereby connecting to the account service unit 11. The account service unit 11 provides a two-dimensional code creation screen to the application user terminal 2B, and accepts an input of the information stored in the two-dimensional code. The two-dimensional code creation screen is presented to the user by, for example, the display unit of the application user terminal 2B.

Fig. 14 is a diagram illustrating an example of the two-dimensional code creation screen.

The two-dimensional code creation screen is provided with an input field for inputting a connection destination (SETUP URL) of the camera 3, an input field for inputting a network name (WIFI SSID) for Wi-Fi (registered trademark) connection, and an input field for inputting a password for Wi-Fi connection. In addition, the two-dimensional code creation screen is provided with an input field for inputting a proxy address (PROXY URL), an input field for inputting a port number (PROXY PORT) of a proxy server, an input field for inputting a user name (PROXY USERNAME) for proxy connection, and an input field for inputting a password (PROXY PASSWORD) for proxy connection. Furthermore, the two-dimensional code creation screen is provided with an input field for inputting an internet protocol (IP) address, an input field for inputting a subnet mask, an input field for inputting setting of a domain name system (DNS) server, and an input field for inputting setting of a network time protocol (NTP) server.

As the connection destination of the camera 3, a URL for accessing the license authorization unit 21 is input by the account service unit 11. The URL for accessing the license authorization unit 21 is, for example, a URL unique to the user.

The network name for the Wi-Fi connection, the password for the Wi-Fi connection, the proxy address, the port number of the proxy server, the user name for the proxy connection, the password for the proxy connection, the IP address, the subnet mask, the setting of the DNS, and the setting of the NTP are included in the network information. The user inputs these pieces of network information on the two-dimensional code creation screen. Note that the proxy address, the port number of the proxy server, the user name for the proxy connection, the password for the proxy connection, the IP address, the subnet mask, the setting of the DNS, and the setting of the NTP are information to be additionally input as options.

In a case where the camera 3 is compatible with PoE (Power over Ethernet), the user does not need to input the network information.

A button 101 for generating a two-dimensional code is provided on a lower side of the two-dimensional code generation screen. When the button 101 is pressed after the network information is input, the account service unit 11 executes processing of generating a two-dimensional code in which the connection destination information and the network information are stored in the payload. Note that the payload of the two-dimensional code may be encrypted information or plain text. The generated two-dimensional code C1 is displayed on the right side of the two-dimensional code generation screen.

A button 102 for downloading the two-dimensional code is provided below a display region of the two-dimensional code C1. When the button 102 is pressed after the two-dimensional code C1 is displayed, the application user terminal 2B downloads the two-dimensional code C1 generated by the account service unit 11.

Next, the application user terminal 2B prints the downloaded two-dimensional code C1 or displays the downloaded two-dimensional code C1 on the display unit. For example, the user arranges the display unit of the application user terminal 2B at the focal position of the camera 3 to adjust the focus of the camera 3 to the two-dimensional code C1. In this state, as indicated by a broken line in Fig. 15, the camera 3 (image sensor IS) images the two-dimensional code C1, and acquires a two-dimensional code image which is an image in which the two-dimensional code appears.

The AP 91 functions as an acquisition unit that acquires the connection destination information and the network information by decoding (analyzing) the two-dimensional code appearing in the two-dimensional code image. The AP 91 stores the acquired network information in a flash (flash memory device) or the like. Note that the network information may be stored in the flash not after the network information is acquired from the two-dimensional code but after the setup of the camera 3 is completed.

A method of acquiring the connection destination information and the like by the camera 3 is not limited to the method using the two-dimensional code, and a method of acquiring the connection destination information and the like via wireless communication such as Wi-Fi or Bluetooth (registered trademark) can be considered.

Next, the AP 91 is connected to the network 5 using the network information, and accesses the URL indicated by the connection destination information to be connected to the license authorization unit 21. The AP 91 transmits the device information unique to the camera 3 to the license authorization unit 21.

The license authorization unit 21 receives the device information transmitted from the AP 91. The license authorization unit 21 functions as an authentication unit that performs authentication of the camera 3 by collating the received device information (first device information) with the device information registered in advance (second device information).

In a case where the first device information matches the second device information, the license authorization unit 21 acquires the URL for downloading the FW from the storage 22. For example, a Shared Access Signature (SAS) URL in which at least one of an expiration date and an access restriction is set is acquired as the URL for downloading the FW. The license authorization unit 21 transmits the obtained SAS URL to the AP 91.

The AP 91 receives the SAS URL transmitted from the license authorization unit 21, accesses the SAS URL, and downloads the FW from the storage 22. As described above, the AP 91 also functions as a communication control unit that transmits the device information unique to the camera 3 to the license authorization unit 21 and downloads the FW from the storage 22. The AP 91 updates the downloaded FW to complete the setup of the camera 3.

Since the initial FW having only a function of analyzing the two-dimensional code and a function of connecting to the license authorization unit 21 and the storage 22 is incorporated in the AP 91 (camera 3) at the time of shipment from the factory, the camera 3 cannot execute AI image processing or the like. Since AI image processing or the like is not executed, the user cannot use the camera 3 for the application of operating the service. When the authentication of the camera 3 succeeds and the initial FW incorporated in the AP 91 is updated to the FW downloaded from the storage 22, the camera 3 can execute AI image processing or the like.

Fig. 16 is a diagram illustrating an example of a flow of the authentication of the camera 3.

Fig. 16 illustrates an example in which the cameras 3 are connected to different clouds for each user to perform setup.

As illustrated in the upper part of Fig. 16, it is assumed that a user A has purchased three cameras 3-1 to 3-3. As illustrated in balloons #21 to #23, device information unique to each device is stored in each of the cameras 3-1 to 3-3 at the time of the shipment from the factory.

The user A accesses a cloud A by using the application user terminal 2B and acquires a two-dimensional code C11. The cloud A is a cloud-side information processing apparatus dedicated to the user A, which provides services to the user A. In the two-dimensional code C11, as illustrated in a balloon #24, a connection destination URL (connection destination information) for connection to the cloud A and network information are stored.

The cameras 3-1 to 3-3 are connected to the cloud A on the basis of the connection destination information acquired from the two-dimensional code C11, and transmit the device information stored therein to the cloud A.

When the cameras 3-1 to 3-3 are purchased, device information of each of the cameras 3-1 to 3-3 is registered in the cloud A as indicated by a balloon #25. In other words, the cameras 3-1 to 3-3 are registered in association with the user A. The cloud A collates the device information transmitted from each of the cameras 3-1 to 3-3 with the registered device information. In a case where the device information transmitted from each of the cameras 3-1 to 3-3 matches the registered device information, the authentication of the cameras 3-1 to 3-3 succeeds, and the cameras 3-1 to 3-3 can update the FW.

As illustrated in the lower part of Fig. 16, it is assumed that a user B has purchased two cameras 3-4 and 3-5. As illustrated in balloons #31 and #32, device information unique to each device is stored in each of the cameras 3-4 and 3-5 at the time of the shipment from the factory.

The user B accesses a cloud B by using the application user terminal 2B and acquires a two-dimensional code C12. The cloud B is a cloud-side information processing apparatus dedicated to the user B, which provides services to the user B. In the two-dimensional code C12, as illustrated in a balloon #33, a connection destination URL (connection destination information) for connection to the cloud B and network information are stored.

The cameras 3-4 and 3-5 are connected to the cloud B on the basis of the connection destination information acquired from the two-dimensional code C12, and transmit the device information stored therein to the cloud B.

When the cameras 3-4 and 3-5 are purchased, device information of each of the cameras 3-4 and 3-5 is registered in the cloud B as indicated by a balloon #34. In other words, the cameras 3-4 and 3-5 are registered in association with the user B. The cloud B collates the device information transmitted from each of the cameras 3-4 and 3-5 with the registered device information. In a case where the device information transmitted from each of the cameras 3-4 and 3-5 matches the registered device information, the authentication of the cameras 3-4 and 3-5 succeeds, and the cameras 3-4 and 3-5 can update the FW.

For example, even in a case where the user B causes the camera 3-1 to image the two-dimensional code C12, in which the connection destination URL for connection to the cloud B is stored, and the camera 3-1 is connected to the cloud B, the device information of the camera 3-1 is not registered in the cloud B, and thus the camera 3-1 is not authenticated. In a case where the authentication is not performed, the FW cannot be updated, and thus the camera 3-1 cannot execute AI image processing or the like. Therefore, the user B cannot use the camera 3-1 purchased by the user A.

As described above, unless an authorized user sets up the camera 3 using the two-dimensional code acquired by an authorized procedure, various functions of the camera 3 cannot be used. Therefore, only an authorized user who has purchased the camera 3 can use the camera 3.

Next, processing executed by the edge-side information processing apparatus (camera 3) and the cloud-side information processing apparatus (cloud server 1 and management server 4) in order to perform the setup of the camera 3 will be described with reference to the sequence diagram in Fig. 17.

In step S101, the user accesses the account service unit 11 of the cloud-side information processing apparatus by using the application user terminal 2B, and generates a two-dimensional code.

The account service unit 11 generates a two-dimensional code on the basis of network information or the like input by the user on the two-dimensional code creation screen in step S41, and causes the application user terminal 2B to download the two-dimensional code in step S42.

In step S102, the application user terminal 2B downloads the two-dimensional code from the account service unit 11.

In step S103, the user presents the two-dimensional code to the camera 3 by, for example, arranging the display unit of the application user terminal 2B on which the two-dimensional code is displayed, at the focal position of the camera 3.

In step S111, the image sensor IS of the camera 3 images the two-dimensional code and acquires a two-dimensional code image.

In step S112, the image sensor IS supplies the two-dimensional code image to the AP 91 of the camera 3.

In step S121, the AP 91 acquires the two-dimensional code image supplied from the image sensor IS.

In step S122, the AP 91 performs recognition processing (analysis) of the two-dimensional code shown in the two-dimensional code image, and acquires the connection destination information and the network information.

In step S123, the AP 91 stores the network information acquired from the two-dimensional code, in the flash.

In step S124, the AP 91 is connected to the network 5 on the basis of the network information, and is connected to the license authorization unit 21 of the edge-side information processing apparatus on the basis of the connection destination information. After being connected to the license authorization unit 21, the AP 91 transmits the device information unique to the camera 3 to the license authorization unit 21.

The license authorization unit 21 receives the device information transmitted from the AP 91 in step S131, and collates the device information transmitted from the AP 91 with the device information registered in advance in step S132.

In a case where it is determined that the device information transmitted from the AP 91 is not the device information registered in advance, the license authorization unit 21 rejects the connection by the AP 91 in step S133.

In a case where it is determined that the device information transmitted from the AP 91 is the device information registered in advance, the license authorization unit 21 supplies an acquisition request of the SAS URL for the camera 3 to download the FW, to the storage 22 of the edge-side information processing apparatus in step S134.

In a case where the storage 22 receives the acquisition request of the SAS URL from the license authorization unit 21 in step S151, the storage 22 supplies the SAS URL to the license authorization unit 21 in step S152.

The license authorization unit 21 acquires the SAS URL supplied from the storage 22 in step S135, and transmits the SAS URL to the AP 91 in step S136.

In step S125, the AP 91 receives the SAS URL transmitted from the license authorization unit 21, and is connected to the storage 22 on the basis of the SAS URL.

In step S126, the AP 91 transmits a download request of the FW to the storage 22.

In a case where the download request of the FW transmitted from the AP 91 is received in step S153, the storage 22 causes the AP 91 to download the FW in step S154.

The AP 91 downloads the FW from the storage 22 in step S127, and updates the initial FW to the FW downloaded from the storage 22 in step S128.

As described above, in the cloud-side information processing apparatus, authentication of the device is performed by collating the first device information unique to the device such as the camera 3 transmitted from the camera 3 that has acquired the connection destination information indicating the connection destination with the second device information registered in advance. In addition, in the edge-side information processing apparatus, the connection destination information indicating the cloud-side information processing apparatus that performs the authentication of the device as the connection destination is acquired, the first device information is transmitted to the cloud-side information processing apparatus indicated by the connection destination information, and in a case where the authentication of the device succeeds (in a case where the execution of the setup is authorized), the FW is downloaded from the cloud-side information processing apparatus. In a case where the authentication of the device succeeds, that is, in a case where an authorized user is about to perform the setup of the device, the setup of the device is completed, and only the authorized user can use the device.

Note that a plurality of cameras 3 used by a plurality of users may be connected to one cloud to perform the setup.

Fig. 18 is a diagram illustrating an example of another flow of the authentication of the camera 3.

Similarly to the example described with reference to Fig. 16, it is assumed that the user A has purchased three cameras 3-1 to 3-3, and the user B has purchased two cameras 3-4 and 3-5.

The user A accesses the cloud by using the application user terminal 2B and acquires a two-dimensional code C21. The cloud is a cloud-side information processing apparatus that provides the services to a plurality of users such as the user A and the user B. In the two-dimensional code C21, as illustrated in a balloon #41, a connection destination URL (connection destination information) for connection to the cloud, the account information of the user A, and the network information are stored.

The cameras 3-1 to 3-3 are connected to the cloud on the basis of the connection destination information acquired from the two-dimensional code C21, and transmit the device information stored therein and the account information of the user A acquired from the two-dimensional code C21, to the cloud.

When the cameras 3-1 to 3-3 are purchased, the device information of each of the cameras 3-1 to 3-3 is registered in the cloud in association with the account information of the user A as indicated by a balloon #43. The cloud collates the device information transmitted from each of the cameras 3-1 to 3-3 with the device information registered in association with the account information of the user A. In a case where the device information transmitted from each of the cameras 3-1 to 3-3 matches the registered device information, the authentication of the cameras 3-1 to 3-3 succeeds, and the cameras 3-1 to 3-3 can update the FW.

On the other hand, the user B accesses the cloud by using the application user terminal 2B and acquires a two-dimensional code C22. In the two-dimensional code C22, as illustrated in a balloon #42, a connection destination URL (connection destination information) for connection to the cloud, the account information of the user B, and network information are stored.

The cameras 3-4 and 3-5 are connected to the cloud on the basis of the connection destination information acquired from the two-dimensional code C22, and transmit the device information stored therein and the account information of the user B acquired from the two-dimensional code C22, to the cloud.

When the cameras 3-4 and 3-5 are purchased, the device information of each of the cameras 3-4 and 3-5 is registered in the cloud in association with the account information of the user B as indicated by the balloon #43. The cloud B collates the device information transmitted from each of the cameras 3-4 and 3-5 with the device information registered in association with the account information of the user B. In a case where the device information transmitted from each of the cameras 3-4 and 3-5 matches the registered device information, the authentication of the cameras 3-4 and 3-5 succeeds, and the cameras 3-4 and 3-5 can update the FW.

For example, even in a case where the user B causes the camera 3-1 to image the two-dimensional code C22, in which the account information of the user B is stored, and the camera 3-1 is connected to the cloud, the device information of the camera 3-1 is not registered in association with the account information of the user B, and thus the camera 3-1 is not authenticated. In a case where the authentication is not performed, the FW cannot be updated, and thus the camera 3-1 cannot execute AI image processing or the like. Therefore, the user B cannot use the camera 3-1 purchased by the user A.

As described above, even in a case where a plurality of cameras 3 used by a plurality of users are connected to one cloud to perform the setup, only an authorized user who has purchased the camera 3 can use the camera 3.

Note that, when the camera 3 is purchased, only the device information may be registered in the cloud without registering the account information of the user. In a case where the camera 3 that has not been purchased is stolen, since the device information of the stolen camera 3 is not registered in the cloud, the stolen camera 3 is not authenticated even when an unauthorized user who has not purchased the camera 3 tries to perform the setup of the stolen camera 3. In a case where the authentication is not performed, the FW cannot be updated, and thus the stolen camera 3 cannot execute AI image processing or the like. Therefore, the unauthorized user cannot use the stolen camera 3.

### <3. Regarding Relearning>

As described above, the flow of processing when relearning of the AI model and updating of the AI model (hereinafter, referred to as "edge-side AI model") or the AI application deployed to each camera 3 or the like are performed with the operation of the provider or the user (user) of the services as a trigger after the SW component of the AI application and the AI model are deployed will be specifically described with reference to Fig. 19. Note that Fig. 19 focuses on one camera 3 among the plurality of cameras 3. In addition, the edge-side AI model as an update target in the following description is deployed in the image sensor IS included in the camera 3 as an example, but of course, the edge-side AI model may be deployed outside of the image sensor IS in the camera 3.

First, in processing step PS1, a provider or a user of the services issues a relearning instruction of the AI model. This instruction is performed using an application programming interface (API) function of an API module included in the cloud-side information processing apparatus. In addition, in the instruction, an image amount (for example, the number of images) used for learning is designated. Hereinafter, the image amount used for learning is also referred to as "predetermined number of images".

In response to the instruction, the API module transmits a relearning request and the information of the image amount to the Hub (similar to the Hub illustrated in Fig. 5) in processing step PS2.

In processing step PS3, the Hub transmits an update notification and the information of the image amount to the camera 3 as the edge-side information processing apparatus.

The camera 3 transmits captured image data obtained by performing imaging to an image database (DB) of a storage management unit in processing step PS4. The imaging processing and the transmission processing are performed until a predetermined number of images necessary for relearning are achieved.

Note that, in a case where the camera 3 obtains an inference result by performing inference processing on the captured image data, the inference result may be stored in the image DB as metadata of the captured image data in processing step PS4.

Since the inference result in the camera 3 is stored in the image DB as metadata, it is possible to carefully select data necessary for relearning of the AI model executed on the cloud side. Specifically, relearning can be performed using only image data in which the inference result in the camera 3 is different from a result of inference performed using abundant computer resources in the cloud-side information processing apparatus. Therefore, the time required for relearning can be shortened.

After finishing the capturing and transmission of the predetermined number of images, the camera 3 notifies the Hub that the transmission of the predetermined number of pieces of captured image data is completed in processing step PS5.

Upon receiving the notification, the Hub notifies the orchestration tool that the preparation of the data for relearning is completed in processing step PS6.

In processing step PS7, the orchestration tool transmits an execution instruction of labeling processing to a labeling module.

The labeling module acquires the image data as a target for the labeling processing, from the image DB (processing step PS8), and performs the labeling processing.

The labeling processing described herein may be processing of performing the class identification described above, processing of estimating the gender and the age of the subject of the image and assigning a label, processing of estimating the pose of the subject and assigning a label, or processing of estimating the behavior of the subject and assigning a label.

The labeling processing may be performed manually or automatically. In addition, the labeling processing may be completed by the cloud-side information processing apparatus, or may be realized by using a service provided by another server apparatus.

The labeling module that has finished the labeling processing stores the labeling result information in a data set DB in processing step PS9. Here, the information stored in the data set DB may be a set of label information and image data, or may be image identification (ID) information for specifying image data instead of the image data itself.

The storage management unit that has detected that the labeling result information is stored notifies the orchestration tool in processing step PS10.

The orchestration tool that has received the notification checks that the labeling processing on the predetermined number of pieces of image data has ended, and transmits a relearning instruction to a relearning module in processing step PS11.

The relearning module that has received the relearning instruction acquires the data set used for learning from the data set DB in processing step PS12, and acquires the AI model as an update target from a trained AI model DB in processing step PS13.

The relearning module performs relearning of the AI model by using the acquired data set and the AI model. The updated AI model obtained in this manner is stored again in the trained AI model DB in processing step PS14.

The storage management unit that has detected that the updated AI model is stored notifies the orchestration tool in processing step PS15.

The orchestration tool that has received the notification transmits a conversion instruction of the AI model to a conversion module in processing step PS16.

The conversion module that has received the conversion instruction acquires the updated AI model from the trained AI model DB in processing step PS17, and performs conversion processing of the AI model. In the conversion processing, processing of performing conversion in accordance with specification information or the like of the camera 3 as the equipment of the deployment destination is performed. In this processing, downsizing is performed so as not to degrade the performance of the AI model as much as possible, and conversion of a file format or the like is performed so as to be operable on the camera 3.

The AI model converted by the conversion module is the above-described edge-side AI model. The converted AI model is stored in a converted AI model DB in processing step PS18.

The storage management unit that has detected that the converted AI model is stored notifies the orchestration tool in processing step PS19.

The orchestration tool that has received the notification transmits a notification for executing the update of the AI model to the Hub in processing step PS20. This notification includes information for specifying a location where the AI model used for the update is stored.

The Hub that has received the notification transmits an update instruction of the AI model to the camera 3 in processing step PS21. The update instruction also includes information for specifying a location where the AI model is stored.

In processing step PS22, the camera 3 performs processing of acquiring and deploying the target converted AI model from the converted AI model DB. As a result, the update of the AI model used in the image sensor IS of the camera 3 is performed.

The camera 3 that has finished the update of the AI model by deploying the AI model transmits an update completion notification to the Hub in processing step PS23. The Hub that has received the notification notifies the orchestration tool that the AI model update processing of the camera 3 is completed in processing step PS24.

Note that, here, the example in which the AI model is deployed and used in the image sensor IS (for example, the memory unit 45 illustrated in Fig. 7) of the camera 3 has been described. However, even in a case where the AI model is deployed and used outside of the image sensor (for example, the memory unit 34 in Fig. 7) or in the fog server in the camera 3, the update of the AI model can be similarly performed.

In that case, when the AI model is deployed, an apparatus (location) in which the AI model is deployed is stored in the storage management unit or the like on the cloud side, and the Hub reads the apparatus (location) in which the AI model is deployed from the storage management unit, and transmits an update instruction of the AI model to the apparatus in which the AI model is deployed.

In processing step PS22, the apparatus that has received the update instruction performs processing of acquiring and deploying the target converted AI model from the converted AI model DB. As a result, the update of the AI model of the apparatus that has received the update instruction is performed.

Note that, in a case where only the update of the AI model is performed, the processing so far is completed. In a case where the update of the AI application using the AI model is performed in addition to the update of the AI model, processing to be described below is further executed.

Specifically, in processing step PS25, the orchestration tool transmits a download instruction of the AI application such as the updated firmware to a deployment control module.

In processing step PS26, the deployment control module transmits a deployment instruction of the AI application to the Hub. This instruction includes information for specifying a location where the updated AI application is stored.

In processing step PS27, the Hub transmits the deployment instruction to the camera 3.

In processing step PS28, the camera 3 downloads and deploys the updated AI application from a container DB of the deployment control module.

In addition, in a case where both the AI model and the AI application are to operate in one apparatus, both the AI model and the AI application may be collectively updated as one container. In that case, the update of the AI model and the update of the AI application may be performed simultaneously instead of sequentially. Then, it can be realized by executing each processing of processing steps PS25, PS26, PS27, and PS28.

For example, in a case where it is possible to deploy both the containers of the AI model and the AI application in the image sensor IS of the camera 3, the update of the AI model and the AI application can be performed by executing each processing of processing steps PS25, PS26, PS27, and PS28 as described above.

By performing the above-described processing, the relearning of the AI model is performed using the captured image data captured in the use environment of the user. Therefore, it is possible to generate the edge-side AI model capable of outputting a highly accurate recognition result in the use environment of the user.

In addition, even in a case where the use environment of the user is changed, for example, in a case where the layout in the store is changed or in a case where the installation place of the camera 3 is changed, the relearning of the AI model can be appropriately performed each time, and thus, it is possible to maintain the recognition accuracy by the AI model without deteriorating. Note that each processing described above may be executed not only when the relearning of the AI model is performed but also when the system is operated for the first time under the use environment of the user.

### <4. Screen Example of Marketplace>

An example of a screen presented to the user regarding the marketplace will be described with reference to Figs. 20 to 22.

Fig. 20 illustrates an example of a login screen G1.

The login screen G1 is provided with an ID input field 111 for inputting a user ID and a password input field 112 for inputting a password.

A login button 113 for performing login and a cancel button 114 for canceling login are arranged below the password input field 112.

In addition, an operator for transitioning to a page for a user who has forgotten a password, an operator for transitioning to a page for newly performing user registration, and the like are appropriately arranged below the buttons.

When the login button 113 is pressed after an appropriate user ID and password are input, processing of transitioning to a user-specific page is executed in each of the cloud server 1 and the user terminal 2.

Fig. 21 is an example of a screen presented to, for example, an AI application developer who uses the application developer terminal 2A and an AI model developer who uses the AI model developer terminal 2C.

Each developer can purchase a learning data set, an AI model, and an AI application through the marketplace for development. In addition, it is possible to register an AI application or an AI model developed by oneself in the marketplace.

On a developer-oriented screen G2 illustrated in Fig. 21, a learning data set, an AI model, an AI application, and the like (hereinafter, collectively referred to as "data"), which are purchasable, are displayed on the left side.

Note that, although not illustrated, at the time of purchasing the learning data set, an image of the learning data set is displayed on a display, only a desired portion of the image is surrounded by a frame using an input device such as a mouse, and a name is input, whereby preparation for learning can be performed.

For example, in a case where it is desired to perform AI learning with images of cats, by surrounding only a portion of the cat on the image with a frame and inputting "cat" as text input, images to which a cat annotation has been added can be prepared for AI learning.

In addition, in order to easily find desired data, the purpose such as "traffic monitoring", "traffic line analysis", and "customer count" may be selectable. That is, display processing of displaying only data suitable for the selected purpose is executed in each of the cloud server 1 and the user terminal 2.

Note that the purchase price of each piece of data may be displayed on the developer-oriented screen G2.

In addition, on the right side of the developer-oriented screen G2, an input field 115 for registering a learning data set collected or created by the developer, and an AI model or an AI application developed by the developer is provided.

The input field 115 for inputting a name and a data storage location is provided for each piece of data. In addition, a check box 116 for setting necessity/unnecessity of retraining is provided for the AI model.

Note that a price setting field (described as the input field 115 in the drawing) in which a price necessary for purchasing the data to be registered can be set may be provided.

In addition, in the upper part of the developer-oriented screen G2, a user name, a final login date, and the like are displayed as a part of the user information. Note that, in addition to this, the amount of currency, the number of points, and the like that can be used when the user purchases data may be displayed.

Fig. 22 illustrates an example of a user-oriented screen G3 presented to a user (the above-described application-using user) who performs various kinds of analysis and the like by deploying an AI application and an AI model in the camera 3 as the edge-side information processing apparatus managed by the user himself/herself.

The user can purchase the camera 3 arranged in a space as the monitoring target through the marketplace. Therefore, on the left side of the user-oriented screen G3, radio buttons 117 capable of selecting the type and performance of the image sensor IS mounted on the camera 3, the performance of the camera 3, and the like are arranged.

In addition, the user can purchase an information processing apparatus as the fog server through the marketplace. Therefore, radio buttons 117 for selecting each performance of the fog server are arranged on the left side of the user-oriented screen G3. In addition, the user who already has the fog server can register the performance of the fog server by inputting the performance information of the fog server here.

The user realizes a desired function by installing the purchased camera 3(alternatively, the camera 3 purchased without going through the marketplace may be used) at an arbitrary place such as a store managed by the user, and in order to maximize the function of each camera 3, the information on the installation place of the camera 3 can be registered in the marketplace.

On the right side of the user-oriented screen G3, radio buttons 118 capable of selecting environment information regarding the environment in which the camera 3 is installed are arranged. The user sets the optimum imaging setting described above for the target camera 3 by appropriately selecting the environment information regarding the environment in which the camera 3 is installed.

Note that, in a case where the camera 3 is purchased and the installation place of the camera 3 to be purchased is determined, it is possible to purchase the camera 3 in which optimum imaging setting is set in advance according to the installation scheduled place by selecting each item on the left side and each item on the right side of the user-oriented screen G3.

An execution button 119 is provided on the user-oriented screen G3. By pressing the execution button 119, the screen transitions to a confirmation screen for confirming the purchase or a confirmation screen for confirming the setting of the environment information. As a result, the user can purchase a desired camera 3 or a fog server, and can perform setting of the environmental information for the camera 3.

In the marketplace, it is possible to change the environment information of each camera 3 for a case where the installation place of the camera 3 is changed. By re-inputting the environmental information regarding the installation place of the camera 3 on a change screen (not illustrated), it is possible to re-set the optimum imaging setting for the camera 3.

### <Others>

The above-described series of processing can also be executed by hardware or software. In a case where the series of processing is executed by software, a program constituting the software is to be installed on a computer built into dedicated hardware, a general-purpose personal computer, or the like.

The program to be installed is provided by being recorded on the removable medium 82 illustrated in Fig. 11, which is realized by an optical disc (compact disc-read only memory (CD-ROM), digital versatile disc (DVD), or the like), a semiconductor memory, or the like. In addition, the program may also be provided over a wired or wireless transmission medium such as a local area network, the Internet, or digital satellite broadcasting. The program can be installed in advance in the ROM 72, the storage unit 79, or the like.

Note that the program executed by the computer may be a program that performs processing chronologically in the order described in the present specification or may be a program that performs processing in parallel or at a necessary timing such as a called time.

Note that in the present specification, a system means a set of a plurality of constituent elements (apparatuses, modules (components), or the like) and all the constituent elements may be located or not located in the same casing. Therefore, a plurality of apparatuses contained in separate casings and connected through a network, and one apparatus in which a plurality of modules are contained in one casing, are both systems.

Note that the effects described in the present specification are merely examples and are not intended to be limiting, and other effects may be obtained.

The embodiments of the present technology are not limited to the embodiments described above, and various changes can be made without departing from the gist of the present technology.

In addition, each step described in the above flowchart can be executed by one apparatus or executed in a shared manner by a plurality of apparatuses.

Furthermore, in a case where one step includes a plurality of types of processing, the plurality of types of processing included in the one step can be executed by one apparatus or executed in a shared manner by a plurality of apparatuses.

### <Combination Example of Configuration>

The present technology can also have the following configurations.

(1) An information processing method including:
   via a server apparatus,
   performing authentication of a device by collating first device information unique to the device, which is transmitted from the device that has acquired connection destination information indicating a connection destination, with second device information registered in advance.
(2) The information processing method according to (1),
   wherein in a case where the first device information matches the second device information, information for the device to download firmware is transmitted to the device.
(3) The information processing method according to (2),
   wherein the information for downloading the firmware includes a URL in which at least one of an expiration date and an access restriction is set.
(4) The information processing method according to (2) or (3),
   wherein the firmware includes firmware for the device to execute at least a part of a program of an AI application.
(5) The information processing method according to any one of (1) to (4),
   wherein the second device information is registered in association with a user of the device.
(6) The information processing method according to (5),
   wherein the connection destination information indicates the server apparatus different for each user as a connection destination.
(7) The information processing method according to (5),
   wherein the connection destination information indicates the server apparatus, to which a plurality of the devices used by a plurality of the users are connected, as a connection destination, and
   the device acquires account information regarding the user together with the connection destination information.
(8) The information processing method according to any one of (1) to (7),
   wherein a two-dimensional code in which the connection destination information is stored is generate, and the two-dimensional code is provided to a user of the device, and the connection destination information is acquired by the device by imaging the two-dimensional code with a camera and analyzing the two-dimensional code.
(9) The information processing method according to (8),
   wherein a two-dimensional code creation screen for inputting the connection destination information stored in the two-dimensional code is presented to the user.
(10) The information processing method according to (8) or (9),
   wherein network information for the device to be connected to a network is stored together with the connection destination information in the two-dimensional code.
(11) A server apparatus including:
   an authentication unit that performs authentication of a device by collating first device information unique to the device, which is transmitted from the device that has acquired connection destination information indicating a connection destination, with second device information registered in advance.
(12) An information processing method including:
   via an information processing apparatus,
   acquiring connection destination information indicating, as a connection destination, a server that performs authentication of an own apparatus by collating first device information unique to the own apparatus with second device information registered in advance;
   transmitting the first device information to the server indicated by the connection destination information; and
   downloading firmware of the own apparatus from the server in a case where the first device information matches the second device information.
(13) The information processing method according to (12),
   wherein firmware for acquiring the connection destination information and connecting to the server is incorporated in the information processing apparatus in advance, and setup is performed by updating the firmware to firmware downloaded from the server.
(14) The information processing method according to (12) or (13),
   wherein the firmware downloaded from the server includes firmware for the information processing apparatus to execute at least a part of a program of an AI application.
(15) The information processing method according to any one of (12) to (14),
   wherein the connection destination information is acquired by imaging a two-dimensional code generated by the server with a camera and analyzing the two-dimensional code.
(16) The information processing method according to (15),
   wherein network information for the own apparatus to be connected to a network is stored together with the connection destination information in the two-dimensional code.
(17) The information processing method according to any one of (12) to (16),
   wherein the connection destination information indicates the server different for each user as a connection destination.
(18) The information processing method according to any one of (12) to (16),
   wherein the connection destination information indicates the server to which a plurality of apparatuses used by a plurality of users are connected, as a connection destination, and account information regarding a user of the information processing apparatus is acquired together with the connection destination information.
(19) An information processing apparatus including:
   an acquisition unit that acquires connection destination information indicating, as a connection destination, a server that performs authentication of an own apparatus by collating first device information unique to the own apparatus with second device information registered in advance; and
   a communication control unit that transmits the first device information to the server, and downloads firmware of the own apparatus from the server in a case where the first device information matches the second device information.
(20) The information processing apparatus according to (19), further including:
   a sensor that images a two-dimensional code,
   wherein the acquisition unit acquires the connection destination information by analyzing the two-dimensional code shown in a captured image of the sensor.

### [Reference Signs List]

- 1: Cloud server
- 2: User terminal
- 3: Camera
- 4: Management server
- 5: Network
- 11: Account service unit
- 12: Device monitoring unit
- 13: Marketplace unit
- 14: Camera service unit
- 21: License authorization unit
- 22: Storage
- 91: AP
- IS: Image sensor

## Claims

1. An information processing method comprising:
via a server apparatus,
performing authentication of a device by collating first device information unique to the device, which is transmitted from the device that has acquired connection destination information indicating a connection destination, with second device information registered in advance.

2. The information processing method according to claim 1,
wherein in a case where the first device information matches the second device information, information for the device to download firmware is transmitted to the device.

3. The information processing method according to claim 2,
wherein the information for downloading the firmware includes a URL in which at least one of an expiration date and an access restriction is set.

4. The information processing method according to claim 2,
wherein the firmware includes firmware for the device to execute at least a part of a program of an AI application.

5. The information processing method according to claim 1,
wherein the second device information is registered in association with a user of the device.

6. The information processing method according to claim 5,
wherein the connection destination information indicates the server apparatus different for each user as a connection destination.

7. The information processing method according to claim 5,
wherein the connection destination information indicates the server apparatus, to which a plurality of the devices used by a plurality of the users are connected, as a connection destination, and
the device acquires account information regarding the user together with the connection destination information.

8. The information processing method according to claim 1,
wherein a two-dimensional code in which the connection destination information is stored is generated, and the two-dimensional code is provided to a user of the device, and
the connection destination information is acquired by the device by imaging the two-dimensional code with a camera and analyzing the two-dimensional code.

9. The information processing method according to claim 8,
wherein a two-dimensional code creation screen for inputting the connection destination information stored in the two-dimensional code is presented to the user.

10. The information processing method according to claim 8,
wherein network information for the device to be connected to a network is stored together with the connection destination information in the two-dimensional code.

11. A server apparatus comprising:
an authentication unit that performs authentication of a device by collating first device information unique to the device, which is transmitted from the device that has acquired connection destination information indicating a connection destination, with second device information registered in advance.

12. An information processing method comprising:
via an information processing apparatus,
acquiring connection destination information indicating, as a connection destination, a server that performs authentication of an own apparatus by collating first device information unique to the own apparatus with second device information registered in advance;
transmitting the first device information to the server indicated by the connection destination information; and
downloading firmware of the own apparatus from the server in a case where the first device information matches the second device information.

13. The information processing method according to claim 12,
wherein firmware for acquiring the connection destination information and connecting to the server is incorporated in the information processing apparatus in advance, and setup is performed by updating the firmware to firmware downloaded from the server.

14. The information processing method according to claim 12,
wherein the firmware downloaded from the server includes firmware for the information processing apparatus to execute at least a part of a program of an AI application.

15. The information processing method according to claim 12,
wherein the connection destination information is acquired by imaging a two-dimensional code generated by the server with a camera and analyzing the two-dimensional code.

16. The information processing method according to claim 15,
wherein network information for the own apparatus to be connected to a network is stored together with the connection destination information in the two-dimensional code.

17. The information processing method according to claim 12,
wherein the connection destination information indicates the server different for each user as a connection destination.

18. The information processing method according to claim 12,
wherein the connection destination information indicates the server to which a plurality of apparatuses used by a plurality of users are connected, as a connection destination, and account information regarding a user of the information processing apparatus is acquired together with the connection destination information.

19. An information processing apparatus comprising:
an acquisition unit that acquires connection destination information indicating, as a connection destination, a server that performs authentication of an own apparatus by collating first device information unique to the own apparatus with second device information registered in advance; and
a communication control unit that transmits the first device information to the server, and downloads firmware of the own apparatus from the server in a case where the first device information matches the second device information.

20. The information processing apparatus according to claim 19, further comprising:
a sensor that images a two-dimensional code,
wherein the acquisition unit acquires the connection destination information by analyzing the two-dimensional code shown in a captured image of the sensor.
